(19)

**Europäisches Patentamt**
**European Patent Office**
**Office européen des brevets**

(11) **EP 2 693 387 A1**

(12) **EUROPEAN PATENT APPLICATION**
published in accordance with Art. 153(4) EPC

(43) Date of publication:
**05.02.2014 Bulletin 2014/06**

(21) Application number: **12764307.0**

(22) Date of filing: **23.03.2012**

(51) Int Cl.:
***G06Q 40/06*** (2012.01)

(86) International application number:
**PCT/JP2012/002002**

(87) International publication number:
**WO 2012/132351 (04.10.2012 Gazette 2012/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2011 JP 2011072742**

(71) Applicant: **NEC Corporation
Minato-ku
Tokyo 108-8001 (JP)**

(72) Inventors:
- **MORINAGA, Satoshi
  Tokyo 108-8001 (JP)**
- **IMAMURA, Satoru
  Tokyo 105-8574 (JP)**

(74) Representative: **Robson, Aidan John
Reddie & Grose LLP
16 Theobalds Road
London WC1X 8PL (GB)**

(54) **RISK-PROFILE GENERATION DEVICE**

(57) A risk profile generation device includes: a memory for storing model information of a risk profile defined by a first parameter set, model information of a probability distribution of the first parameter set defined by a second parameter set, a plurality of required conditions, and weighting factors; and a processor is configured to: calculate a value of the second parameter set such that a risk profile to be specified by applying a value of the first parameter set generated based on the probability distribution to the model information of the risk profile satisfies the required conditions with a higher probability, for the required conditions; generate a probability distribution of the first parameter set from the calculated value of the second parameter set, the weighting factors, and the model information of the probability distribution; and generate a value of the first parameter set based on the generated probability distribution.

**FIG. 1**

EP 2 693 387 A1

**Description**

TECHNICAL FIELD

The present invention relates to risk management in companies like financial institutions, more specifically, relates to a method and device for generating a risk profile representing a probability distribution what kinds of loss events occur in what kinds of combinations and on what scale each of the loss events are.

BACKGROUND ART

Before description of the present invention, several terms relating to risk management in financial institutions are defined here. It is assumed that risks are majorly operational risks, but the present invention is not limited to this kind of risks and can be applied to a credit risk relating to margin trading such as loan service, a market risk relating to exchange trading and interest trading, and so on.

First, a loss event shall be an event accompanied by a loss and expressed as x = (a,b). In the equation, a shall denote the content of an event. For example, a = Tokai earthquake. In the equation, b shall denote the scale of a loss. For example, b = 1 billion yen. The scale of a loss does not need to be the amount of money and may be weighed by a lost time, the amount of lost resource, or the like. However, for convenience of description, b shall denote the amount of lost money below.

A sequence $x_1, x_2, ..., x_n$ of loss events occurring during a certain period T shall be denoted by X (symbol "□" shows that a later letter is an index as a subscript of a former letter (e.g., x□1 represents $x_1$). Herein, x□1 = (a□i, b□i). Therefore, X = x□1, ..., x□n = (a□1,b□1), ..., (a□n,b□n). For example, a loss event sequence X, X = (Tokai earthquake, 1 billion yen), (bank transfer scam, 0.2 million yen), (bank transfer scam, 1.5 million yen), shows that, during the period T, a loss of 1 billion yen is caused by Tokai earthquake, a loss of 0.2 million yen is caused by bank transfer scam, and a loss of 1.5 million yen is caused by bank transfer scam again. As in this example, the same loss event may occur plural times.

A risk profile P shall be a probability distribution P(X) of X, where the loss event sequence X is regarded as a random variable. The number n of events shall also be a random variable. Therefore, a value of the probability distribution P(X) is defined with respect to not only the loss event sequence X for a constant number n but also the loss event sequence X for various numbers n.

In other words, the risk profile P is information on a "probability what kinds of loss events occur in what kinds of combinations with what amount of loss" during the period T. The period T is called a holding period in common usage and shall be thus described in this specification.

Risk analysis in financial engineering, reliability engineering and the like leads to estimation and calculation of feature values of the abovementioned risk profile in most cases. In this specification, a probability distribution function (which is determined by determining a probability distribution, such as a mean, a probability percentile and the like of a certain random variable) shall be referred to as a feature value of the probability distribution.

For example, a mean accumulative loss during a holding period is the mean of a loss amount b□1 +, ..., + a loss amount b□n under the risk profile P(X). Moreover, VaR (Value at Risk) defined as the maximum value of a future loss amount that will probably be caused with a certain fixed probability (confidence level P%; P = 99.9, for example) is a lower percentile point (P% point) of a loss amount b□1 +, ..., + a loss amount b□n under the risk profile P(X).

A probability distribution of a number n under the risk profile P(X) shall be referred to as a frequency distribution and expressed as Pf(n). That is to say, the frequency distribution Pf(n) is a probability distribution of the number of times of a loss event occurring during a holding period.

Further, a probability distribution of a loss amount b□* randomly picked up from a loss amount b□1 +, ..., + a loss amount b□n occurring under the risk profile P(X) shall be referred to as a scale distribution and expressed as Ps(b). That is to say, the scale distribution Ps(b) is a probability distribution of the amount of loss of a loss event (one loss event, not accumulated amount) occurring during a holding period.

The abovementioned frequency distribution Pf(n) and scale distribution Ps(b) are examples of the feature values of a risk profile.

Furthermore, because a frequency distribution and a scale distribution are often handled for each event content in common usage for facilitating more detailed risk analysis and discussion, the following will also be defined in this specification. First, the range of an event content a□i shall be A={A^1, ..., A^c} under the risk profile P(X) (a symbol "^" shows that a later letter is an index as a superscript of a former letter (e.g., A^1 represents $A^1$)). That is to say, the content of a possible loss event shall be limited any of A^1 to A^c under the risk profile P(X). Hereinafter, A shall be referred to as the range of the content of an event.

Further, when a□i∈A□c, that is, loss events having an event content A^c are derived from X = x□1, ..., x□n = (a□1,b□1), ..., (a□n,b□n) and lined, and moreover, subscripts "□" are replaced with numbers from 1, it shall be described as follows:

X^c=x^c□1, ..., x^c□nc = (a^c□1, b^c□1), ..., (a^c□nc, b^c□nc),
where a^c□i∈A^c. Moreover, the number of times of occurrence of the loss event having the event content A^c under X is described as nc. Because X^c is a function of X, its probability distribution P^c(X^c) is uniquely determined by the risk profile P(X).

Then, a probability distribution of nc, namely, a probability distribution of the number of times of occurrence of the loss event having the event content A^c during a holding period shall be described as Pf^c(n) and referred to as a frequency distribution of the event content A^c.

Further, a probability distribution of b^c□* randomly derived from b^c□i shall be described as Ps^c(b) and referred to as a scale distribution of the event content A^c. A scale distribution of a loss event with Pf^c(0)=1, namely, with occurrence probability 0 shall become Ps^c(0)=1 for convenience, that is, the amount of loss shall become 0 yen determinately.

Because both the frequency distribution Pf^c(n) and the scale distribution Ps^c(b) of the event content A^c are determined by the risk profile P(X), they are also examples of a feature value of P(X). For example, assuming A^1 = Tokai earthquake, Pf^1(n) is a probability distribution of the "number of times of occurrence of Tokai earthquake" during a holding  period and Ps^1(b) is a probability distribution of the "amount of loss when Tokai earthquake occurs." These Pf^1(n) and Ps^1(b) are determined if the risk profile P(X) is given, that is, a probability distribution what kinds of loss events occur in what kinds of combinations during a holding period and at what amount of loss each of the loss events occurs is given.

In the field of risk analysis, there is a case that generation of many risk profiles P(X) satisfying a specific condition is required. For example, in verification of accuracy of a risk weighing device, for example, an actual value of a random variable under a specific risk profile is actually an input of the risk weighing device. Then, a value outputted by the risk weighing device and a feature value of the risk profile are compared. By executing this operation while changing a risk profile, verification what the accuracy of the risk weighing device is under what type of risk profile is performed (e.g., refer to Non-Patent Document 1). Alternatively, there is also a case that generation of many risk profiles P(X) satisfying a specific condition is required for the purpose other than verification of accuracy of a risk weighting device. For example, there is a case of generating many risk profiles P(X) satisfying a specific condition for the purpose of examining what kind of risk profile takes what kind of feature value.

However, most documents including Non-Patent Document 1 do not disclose a specific method for generating a risk profile satisfying a specific condition.

On the other hand, Patent Document 1 discloses a system that provides a model of VaR that becomes an index for statistically displaying a probable maximum loss such that assets incur with a fixed probability during a holding period, for analyzing the risk of assets including derivatives. This system, for each of all combinations of a means for inputting setting conditions of a parameter necessary for calculation of VaR and a data processing method and the inputted setting conditions, calculates volatility data and correlation coefficient data from observed data, and calculates sensitivity data of assets from held assets data, thereby generating a plurality of VaR models.

Patent Document 1: Japanese Unexamined Patent Application Publication No. JP-A 10-222488
Patent Document 2: Japanese Patent Publication No. 4241083
Non-Patent Document 1: Kobayashi, Shimizu, Nishiguchi and Morinaga "Operational Risk Management" Kinzai Institute for Financial Affairs, Inc, issued on April 24, 2009, pp. 127-134

In a case that the method according to Patent Document 1 is applied to generation of a risk profile, by introducing a parameter into the risk profile P(X) and regulating the value of the parameter so that a condition designated by a user is satisfied, the risk profile P(X) satisfying a specific condition is generated. That is to say, assuming a parameter set configured by one or more parameters is described as θ, a risk profile is defined as P(X; θ) so that the risk profile changes with parameter set θ, and the value of parameter set θ is regulated so that a desired condition is satisfied. Below, a description will be made with a specific example.

For example, assuming a set of 30 parameters λk, μk and σk, (k = 1 to 10) is denoted by θ, risk profile P(X;θ) is defined as described below:

(1) random variables x□1, x□2, ... representing loss events are independent of each other;
(2) a frequency distribution of event content k follows a Poisson distribution with mean of parameter λk;
(3) a scale distribution of event content k follows a log normal distribution with log mean of parameter μk and log standard deviation of parameter σk; and

(4) K = 1 to 10.

Regarding this risk profile P(X;θ), a risk profile to be generated varies with change of the values of λk, μk and σk, (k = 1 to 10) as elements of parameter set θ. Therefore, by properly selecting the value of parameter set θ, it is possible to generate a risk profile satisfying a specific condition.

Now, it is assumed that the following conditions are given:

(a) the mean of the numbers of events with event content k is 2; and
(b) the scale distribution is an exponential distribution of a mean parameter 10.

In this case, it is obvious that parameter λk can only take a value of 2 for satisfying the condition (a) described above. However, it is not obvious what values the remaining 20 parameters μk and σk must take for almost satisfying the condition (b).

If we assume that candidate values of parameters μk and σk are determined by any method and a function representing a divergence between a risk profile specified by these determined values and a required condition b is an objective function, a problem of obtaining optimum values of parameters μk and σk is an optimization problem of obtaining a solution that minimizes the objective function.

However, in a case that the number of combinations of candidate parameter values is huge, it is difficult to obtain optimum parameters μk and σk with a realistic resource (a memory, a microprocessor, or the like) within a practical time, because of so-called combinational explosion.

Further, by solving the optimization problem as described above, it is possible to obtain only one pair of values of parameters μk and σk that almost satisfy a required condition, namely, only one risk profile. Therefore, in order to generate many risk profiles that almost satisfy the required condition b, it is necessary to solve many optimization problems as described above. Accordingly, it is extremely difficult to generate many risk profiles that almost satisfy a required condition with a realistic resource within a practical time.

SUMMARY

An object of the present invention is to provide a risk profile generation device that solves the aforementioned problem, namely, a problem that it is practically difficult to generate many risk profiles satisfying a specific condition.

A risk profile generation device according to an exemplary embodiment of the present invention includes:

a memory for storing model information of a risk profile defined by a first parameter set including one or more parameters, model information of a probability distribution of the first parameter set defined by a second parameter set including one or more parameters, a plurality of required conditions, and weighting factors of the plurality of required conditions; and
a processor connected to the memory,
wherein the processor is configured to:

calculate a value of the second parameter set such that a risk profile to be specified by applying a value of the first parameter set generated in accordance with the probability distribution to the model information of the risk profile satisfies the required conditions with a higher probability, for each of the required conditions;
generate a probability distribution of the first parameter set from the value of the second parameter set calculated for each of the required conditions, the weighting factors, and the model information of the probability distribution; and
generate a value of the first parameter set in accordance with the generated probability distribution of the first parameter set.

Further, a risk profile generation method according to another exemplary embodiment of the present invention is a risk profile generation method executed by a risk profile generation device including: a memory for storing model information of a risk profile defined by a first parameter set including one or more parameters, model information of a probability distribution of the first parameter set defined by a second parameter set including one or more parameters, a plurality of required conditions, and weighting factors of the plurality of required conditions; and a processor connected to the memory.

The risk profile generation method includes, by the processor:

calculating a value of the second parameter set such that a risk profile to be specified by applying a value of the first parameter set generated in accordance with the probability distribution to the model information of the risk profile satisfies the required conditions with a higher probability, for each of the required conditions;
generating a probability distribution of the first parameter set from the value of the second parameter set calculated for each of the required conditions, the weighting factors, and the model information of the probability distribution; and generating a value of the first parameter set in accordance with the generated probability distribution of the first parameter set.

With the abovementioned configurations, the present invention makes it possible to generate many risk profiles that almost satisfy a specific condition with a realistic resource within a practical time.

BRIEF DESCRIPTION OF DRAWINGS

Fig. 1 is a block diagram of a first exemplary embodiment of the present invention;
Fig. 2 is a view showing an example of input information in the first exemplary embodiment of the present invention;
Fig. 3 is a view showing an example of interim information in the first exemplary embodiment of the present invention;
Fig. 4 is a view showing an example of output information in the first exemplary embodiment of the present invention;
Fig. 5 is a flowchart showing an example of an operation of the first exemplary embodiment of the present invention;
Fig. 6 is a flowchart showing an example of an operation of a generator distribution regulating unit in the first exemplary embodiment of the present invention;
Fig. 7 is a view showing a specific example of the input information in the first exemplary embodiment of the present invention;
Fig. 8 is a view showing another specific example of the input information in the first exemplary embodiment of the present invention;
Fig. 9 is a view showing a specific example of the output information in the first exemplary embodiment of the present invention;
Fig. 10 is a block diagram of a second exemplary embodiment of the present invention;
Fig. 11 is a view showing an example of input information in the second exemplary embodiment of the present invention;
Fig. 12 is a view showing an example of interim information in the second exemplary embodiment of the present invention;
Fig. 13 is a view showing an example of output information in the second exemplary embodiment of the present invention;
Fig. 14 is a flowchart showing an example of an operation of the second exemplary embodiment of the present invention;
Fig. 15 is a view showing a specific example of the input information in the second exemplary embodiment of the present invention;
Fig. 16 is a schematic configuration diagram of a third exemplary embodiment of the present invention;
Fig. 17 is a block diagram of the third exemplary embodiment of the present invention;
Fig. 18 is a view showing an example of test data in the third exemplary embodiment of the present invention;
Fig. 19 is a flowchart showing an example of an operation of the third exemplary embodiment of the present invention; and
Fig. 20 is a flowchart showing an example of an operation of a test data generating unit in the third exemplary embodiment of the present invention.

EXEMPLARY EMBODIMENTS

Next, exemplary embodiments of the present invention will be described in detail with reference to the drawings.

[First Exemplary Embodiment]

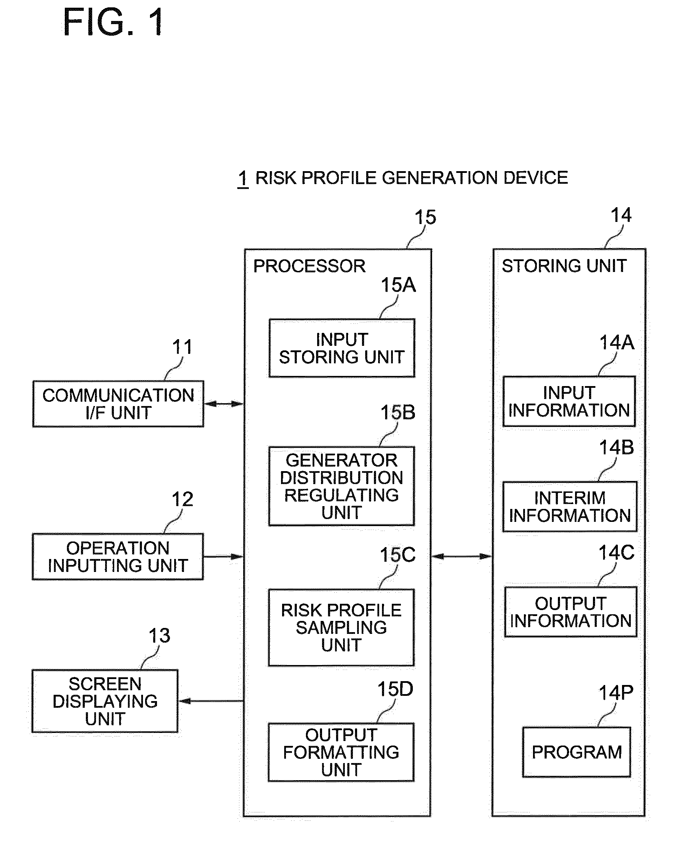

First, with reference to Fig. 1, a risk profile generation device 1 according to a first exemplary embodiment of the present invention will be described in detail.
The risk profile generation device 1 according to this exemplary embodiment has a function of generating many risk profiles almost satisfying a specific condition.
This risk profile generation device 1 has, as major function units, a communication interface unit (referred to as a communication I/F unit hereinafter) 11, an operation inputting unit 12, a screen displaying unit 13, a storing unit 14, and a processor 15.

The communication I/F unit 11 is formed by a dedicated data communication circuit, and has a function of performing data communication with various types of devices, which are not shown in the drawings, connected via communication lines (not shown in the drawings).

The operation inputting unit 12 is formed by an operation input device such as a keyboard and a mouse, and has a function of detecting an operation by an operator and outputting to the processor 15.

The screen displaying unit 13 is formed by a screen display device such as an LCD and a PDP, and has a function of displaying various kinds of information such as an operation menu and a generated risk profile on a screen in accordance with instructions from the processor 15.

The storing unit 14 is formed by a storage device such as a hard disk and a semiconductor memory, and has a function of storing processing information necessary for various kinds of processes by the processor 15 and a program 14P. The program 14P, which is a program loaded into the processor 15 and executed to realize various kinds of processing units, is previously loaded from an external device (not shown) or a computer-readable storage medium (not shown) such as a flexible disk, an optical disk, a magneto-optical disk, a magnetic disk and a semiconductor memory via a data input/output function such as the communication I/F 11, and is stored into the storing unit 14. Major processing information stored by the storing unit 14 is input information 14A, interim information 14B, and output information 14C.

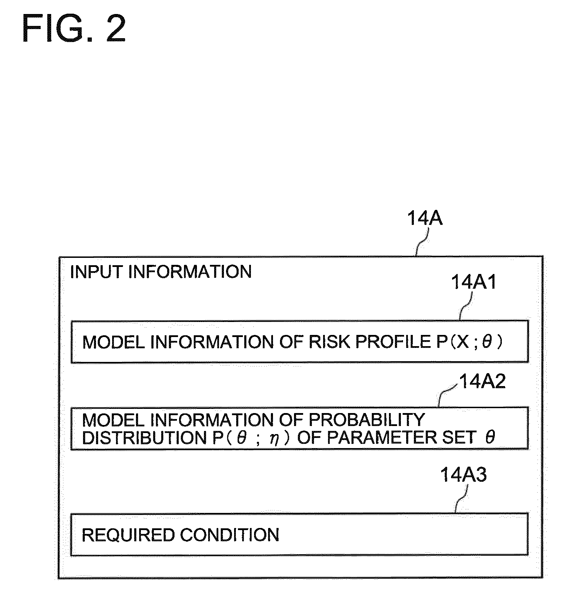

The input information 14A is information inputted from the communication I/F unit 11 or the operation inputting unit 12. Fig. 2 shows an example of the configuration of the input information 14A. The input information 14A in this example is composed of: model information 14A1 of a risk profile $P(X;\theta)$ defined by using a parameter set $\theta$ composed of one or more parameters; model information 14A2 of a probability distribution $P(\theta;\eta)$ of the parameter set $\theta$, defined by using a parameter set $\eta$ composed of one or more parameters; and a required condition 14A3. In this specification, the probability distribution $P(\theta;\eta)$ is also referred to as a generator distribution. Herein, the number of elements of the parameter set $\eta$ is smaller than the number of elements of the parameter set 8.

Definition of the model information 14A1 of the risk profile $P(X;\theta)$ by using the parameter set $\theta$ may be performed by any method. For example, it may be defined that, under a risk profile (X), a frequency distribution of an event content $A^c$ is a Poisson distribution of a parameter $\theta f^c$, a scale distribution of the event content $A^c$ is a normal distribution of a mean parameter $\theta s \square \mu^c$ and a standard deviation parameter $\theta s \square \sigma^c$, the range of the event content is $\{A^1, A^2\}$, and each event is stochastically independent. In this case, it is expressed by a 6-dimensional parameter, $\theta = (\theta f^1, \theta s \square \mu^1, \theta s \square \sigma^1, \theta f^2, \theta s \square \mu^2, \theta s \square \sigma^2)$ with regard to the two event contents. Accordingly, for example, when the number of kinds of event contents is 200, superscripts of respective components of the above $\theta$ takes values 1 to 200, and it is expressed by a 600-dimensionl parameter in total, $\theta = (\theta f^1, \theta s \square \mu^1, \theta s \square \sigma^1, ..., \theta f^{200}, \theta s \square \mu^{200}, \theta s \square \sigma^{200})$.

Definition of the model information 14A2 of the probability distribution $P(\theta;\eta)$ of the parameter set 8 by using the parameter set $\eta$ may be performed by any method. For example, in the case of $\theta = (\theta f^1, \theta s \square \mu^1, \theta s \square \sigma^1, ..., \theta f^C, \theta s \square \mu^C, \theta s \square \sigma^C)$, it may be defined that $\theta f^1, ..., \theta f^C$ independently follow a normal distribution of a mean parameter $\eta \square 1$ and a variance parameter $\eta \square 2$, $\theta s \square \mu^1, ..., \theta s \square \mu^C$ also independently follow a normal distribution of a mean parameter $\eta \square 3$ and a variance parameter $\eta \square 4$, and $\theta s \square \sigma^1, ..., \theta s \square \sigma^C$ also independently follow a normal distribution of a mean parameter $\eta \square 5$ and a variance parameter $\eta \square 6$, for example. In this case, a probability distribution of $\theta$ is uniquely determined by a six-dimensional parameter $\eta = (\eta \square 1, ..., \eta \square 6)$.

The required condition 14A3 is a property that a risk profile to be generated is desired to satisfy with high probability. For example, in the case of generating a risk profile $P(X)$ such that a frequency distribution $Pf(n)$ and a scale distribution $Ps(b)$ are as close as possible to an exponential distribution of a mean parameter = 1 or the like, this is designated as the required condition 14A3.

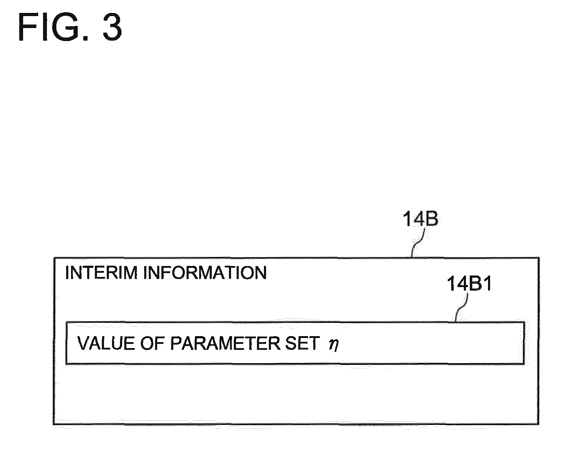

The interim information 14B is interim information generated in the process of calculation by the processor 15. Fig. 3 shows an example of the configuration of the interim information 14B. The interim information 14B in this example is composed of a value 14B1 of the parameter set $\eta$.

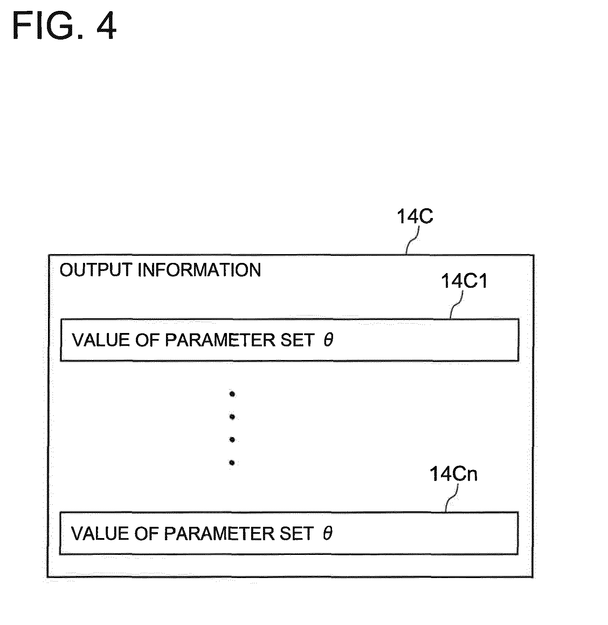

The output information 14C is information on a risk profile generated in the calculation by the processor 15. Fig. 4 shows an example of the configuration of the output information 14C. The output information 14C in this example is composed of a plurality of values 14C1 to 14Cn of the parameter set $\theta$.

The processor 15 has a microprocessor such as a CPU and a peripheral circuit thereof, and has a function of loading the program 14P from the storing unit 14 and executing to make the hardware and the program 14P work in cooperation and realize various kinds of processing units. Major processing units realized by the processor 15 are an input storing unit 15A, a generator distribution regulating unit 15B, a risk profile sampling unit 15C, and an output formatting unit 15D.

The input storing unit 15A has a function of storing information inputted from the communication I/F unit 11 or the operation inputting unit 12 as the input information 14A into the storing unit 14.

The generator distribution regulating unit 15B has a function of loading the input information 14A thereinto and calculating a value of the parameter set $\eta$ in the model information 14A2 such that a risk profile specified by applying the value of the parameter set $\theta$ generated in accordance with the probability distribution $P(\theta;\eta)$ to the model information 14A1 satisfies the required condition 14A3 with a higher probability. Moreover, the generator distribution regulating unit 15B has a function of storing the calculated value of the parameter set $\eta$ as the interim information 14B into the storing unit 14.

Now if we assume that a function representing a divergence between a risk profile specified by applying the value of the parameter set $\theta$ generated in accordance with the probability distribution $P(\theta;\eta)$ to the model information 14A1 and the required condition 14A3 is an objective function, a problem of solving the value of an optimum parameter set $\eta$ is an optimization problem of obtaining a solution which minimizes the above objective function.

As the abovementioned divergence, for example, it is possible to use KL divergence, or mean squared error in a specific interval of a density function.

Further, when a plurality of required conditions are given, a solution method that satisfies a plurality of objective functions as simultaneously as possible can be used, such as a solution method in which a weighted sum of objective functions defined for the respective required conditions is an objective function and a method of setting priorities to the objective functions.

Because techniques for solving an optimization problem have been proposed quite widely, the generator distribution regulating unit 15B can use any of these solution techniques. Instead of directly solving an optimization problem on the abovementioned $\eta$, the generator distribution regulating unit 15B may solve after converting the problem into an equivalent or dual problem. If it is difficult to directly calculate the value of an objective function and a differential coefficient from $\eta$, the generator distribution regulating unit 15B may actually generate one or more $\theta$ in accordance with $P(\theta;\eta)$ under the $\eta$ and calculate to what degree the required condition is satisfied or obtain the probability of satisfaction through simulation, numerical integration, or the like. When it is possible to acquire rough information on calculation of the value of an objective function with respect to certain $\eta$ or approximate calculation thereof by any of the methods, it is possible to at least approximately solve the optimization problem on the $\eta$. Although it is needless to say that the difficulty level of the optimization problem on the $\eta$ depends on the required condition, the difficulty level outstandingly increases as a method of modeling a generator distribution, namely, a function form of $P(\theta;\eta)$ becomes complicated, and therefore, it is desirable to make the modeling method sufficiently simple.

The risk profile sampling unit 15C has a function of loading the input information 14A and the interim information 14B thereinto and repeatedly generating the value of the parameter set $\theta$ in accordance with a probability distribution $P(\theta;\eta)$ specified by applying the value of the parameter set $\eta$ shown in the interim information 14B to the model information 14A2. Generation of the value in accordance with the specific probability distribution may be performed by any method. Because this is sampling based on a distribution $P(\theta;\eta)$ of a random variable $\theta$, it is generally possible to obtain different $\theta$ satisfying the required condition 14A3 with a high probability in every sampling. Moreover, the risk profile sampling unit 15C has a function of storing the generated values of the parameter set $\theta$ as the output information 14C into the storing unit 14.

The output formatting unit 15D has a function of loading the values of the parameter set $\theta$ included in the output information 14C thereinto, and outputting as a final result to the screen displaying unit 13 or to the outside via the communication I/F unit 11. The output formatting unit 15D may have a function of outputting another kind of data, instead of the values of the parameter set $\theta$ or in addition to the values of the parameter set $\theta$, to the screen displaying unit 13 or to the outside via the communication I/F unit 11. The latter function will be described later as a modified example of this exemplary embodiment.

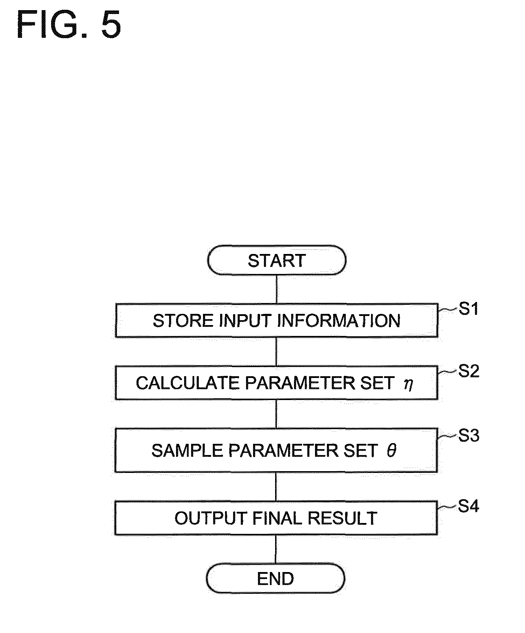

Next, with reference to Fig. 5, an operation of the risk profile generation device 1 according to this exemplary embodiment will be described.

First, the input storing unit 15A receives a model formula 14A1 of a risk profile $P(X;\theta)$, a model formula 14A2 of a probability distribution $P(\theta;\eta)$ of a parameter set $\theta$, and a required condition 14A3 from the communication I/F unit 11 or the operation inputting unit 12, and stores as the input information 14A into the storing unit 14 (step S1).

Next, the generator distribution regulating unit 15B loads the model formula 14A1 of the risk profile $P(X;\theta)$, the model formula 14A2 of the probability distribution $P(\theta;\eta)$ of the parameter set $\theta$, and the required condition 14A3 from the storing unit 14, calculates a value 14B1 of the parameter set $\eta$ such that the risk profile $P(X;\theta)$ determined by a value of the parameter set $\theta$ generated in accordance with the probability distribution $P(\theta;\eta)$ satisfies the required condition 14A3 with a higher probability, and stores as the interim information 14B into the storing unit 14 (step S2). The details of this step S2 will be described later.

Next, the risk profile sampling unit 15C loads the calculated value 14B1 of the parameter set $\eta$, repeatedly generates a value of the parameter set $\theta$ in accordance with the probability distribution $P(\theta;\eta)$ determined by the value 14B1 of the parameter set $\eta$, and stores the generated values 14C1 to 14Cn of the parameter set $\theta$ as the output information 14C into the storing unit 14 (step S3).

Finally, the output formatting unit 15D loads the generated values 14C1 to 14Cn of the parameter set from the storing unit 14, and outputs as a final result to the screen displaying unit 13 or to the outside via the communication I/F unit 11 (step S4).

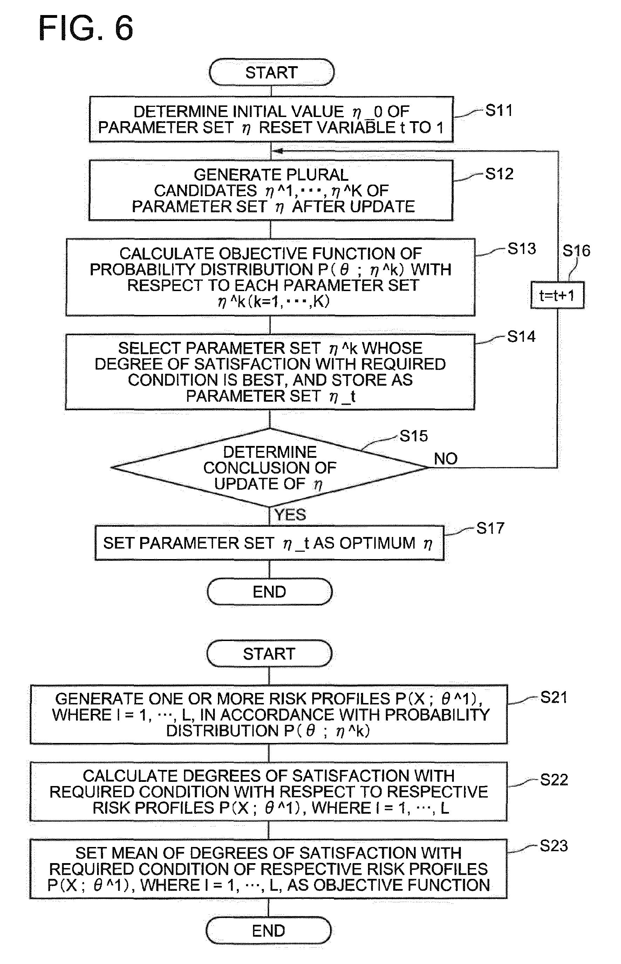

Fig. 6 is a flowchart showing an example of the process at step S2 in Fig. 5. With reference to Fig. 6, an example of the process by the generator distribution regulating unit 15B will be described below.

First, the generator distribution regulating unit 15B determines an initial value $\eta\square 0$ of the parameter set $\eta$, for example, by random numbers, and also resets a variable t to 1 (step S11).

Next, the generator distribution regulating unit 15B generates a plurality of candidates $n^1$, ..., $\eta^K$ different from each other of $\eta$ after update, from a parameter set $\eta\square t-1$ (an initial value at an initial time point) that is the last regulation result (step S12). The easiest method for generating the plurality of candidates $\eta^1$, ..., $\eta^K$ is, for example, increasing or decreasing the respective elements of the parameter set $\eta\square t-1$ before update by a minute amount. For example, if we assume that the parameter set $\eta\square t-1$ before update is 2-dimensional $(\eta 1,\eta 2)$ and the minute amount is 0.001, the generator distribution regulating unit 15B generates a plurality of candidates $\eta^1$, ..., $\eta^4$ as shown below:

candidate $\eta^1 = (\eta 1-0.001, \eta 2-0.001)$;
candidate $\eta^2 = (\eta 1-0.001, \eta 2+0.001)$;
candidate $\eta^3 = (\eta 1+0.001, \eta 2-0.001)$; and
candidate $\eta^4 = (\eta 1+0.001, \eta 2+0.001)$

Although the minute amount is a fixed value in the above example, the minute amount may be a variable value. Particularly as in this case, in a case that there is a need to update $\eta$ so that the required condition 14A3 is satisfied as highly as possible, the minute amount is regulated again depending on what degree each of the abovementioned candidates breaches the required condition 14A3, and the degree of breach is made to be as small as possible. Because various techniques have been studied in the field of a numerical optimization problem, any of the techniques can be used.

Next, the generator distribution regulating unit 15B calculates an objective function of a probability distribution $P(\theta;\eta^k)$ with respect to each parameter set $\eta^k$ (k = 1, ..., K) (step S13). A process of calculating the objective function of the probability distribution $P(\theta;\eta^k)$ with respect to a certain parameter set $\eta^k$ is executed in the following manner, for example.

First, the generator distribution regulating unit 15B generates one or more risk profiles $P(X;\theta^l)$, where I is lowercase of L (I = 1, ..., L; the same shall apply hereinafter), in accordance with the probability distribution $P(\theta;\eta^k)$ (step S21). To be specific, the generator distribution regulating unit 15B generates a value of the parameter set $\theta$ in accordance with the probability distribution $P(\theta;\eta^k)$, applies this generated value to the model information 14A1 of the risk profile $P(X;\theta)$, and generates one risk profile. The generator distribution regulating unit 15B repeatedly executes such a process for number L of risk profiles that it is desired to be generated.

Next, the generator distribution regulating unit 15B calculates the degree of satisfaction of the required condition with respect to each of the generated risk profiles $P(X;\theta^l)$, where I = 1, ..., L (step S22). As the degree of satisfaction of the required condition of a certain risk profile, it is possible to use a divergence between the risk profile and a required condition (e.g., KL divergence, mean squared error in a specific interval of a density function, or the like).

Next, the generator distribution regulating unit 15B calculates the mean of the degree of satisfaction of the required condition of each of the risk profiles $P(X;\theta^l)$, where I = 1, ..., L, and sets this calculation result as an objective function (step S23).

Subsequently, the generator distribution regulating unit 15B compares the objective functions calculated with respect to the respective parameter sets $\eta^k$ (k = 1, ..., K), selects a parameter set $\eta^k$ whose degree of satisfaction of the required condition is the best, and stores this selected parameter set $\eta^k$ as a parameter set $\eta^t$ (step S14).

Next, the generator distribution regulating unit 15B determines whether it is necessary to repeat update of the parameter set $\eta$ (step S15). As a method for determining conclusion of update of $\eta$, for example, it is possible to use a method of comparing the degrees of satisfaction with the required condition between the present parameter set $\eta\square t$ and the last parameter set $\eta\square t-1$ and, when the degree of satisfaction becomes equal to or less than a preset reference, that is, when the degree of satisfaction cannot be increased any more even if $\eta$ is updated, determining that update of $\eta$ is concluded.

When determining that it is still necessary to repeat update of the parameter set $\eta$, the generator distribution regulating unit 15B increments the variable t (step S16), and returns to step S12 to repeat the same process as the aforementioned process. On the other hand, when determining that it is unnecessary to repeat update of the parameter set $\eta$, the generator distribution regulating unit 15B proceeds to step S17.

At step S17, the generator distribution regulating unit 15B stores a parameter set $\eta\square t$ of a final regulation result as optimum $\eta$ into the interim information 14B.

Thus, in this exemplary embodiment, by introducing a probability distribution $P(\theta;\eta)$ of a parameter set $\theta$ ($\eta$ is a parameter of this probability distribution) and regulating a parameter set $\eta$ so that a probability that the parameter set $\theta$ satisfies the required condition 14A3 becomes high, the parameter set $\theta$ is generated in accordance with the probability distribution $P(\theta;\eta)$, and therefore, it is possible to generate many risk profiles satisfying a specific condition with a realistic resource within a practical time. This is because:

(1) by making the number of parameters configuring the parameter set $\eta$ smaller than that of the parameter set $\theta$,

it is possible to regulate the parameter set η with a realistic resource within a practical time;
(2) it is originally possible to sample the parameter set θ according to the generator distribution P(θ;η) with a realistic resource; and
(3) once regulating the generator distribution P(θ;η), it is possible only by repeating sampling the parameter set θ according thereto to obtain various parameter sets θ, namely, various risk profiles P(X;θ) that satisfy the designated required condition 14A3 with a high probability.

Next, with a specific example, the operation in this exemplary embodiment will be described in more detail.

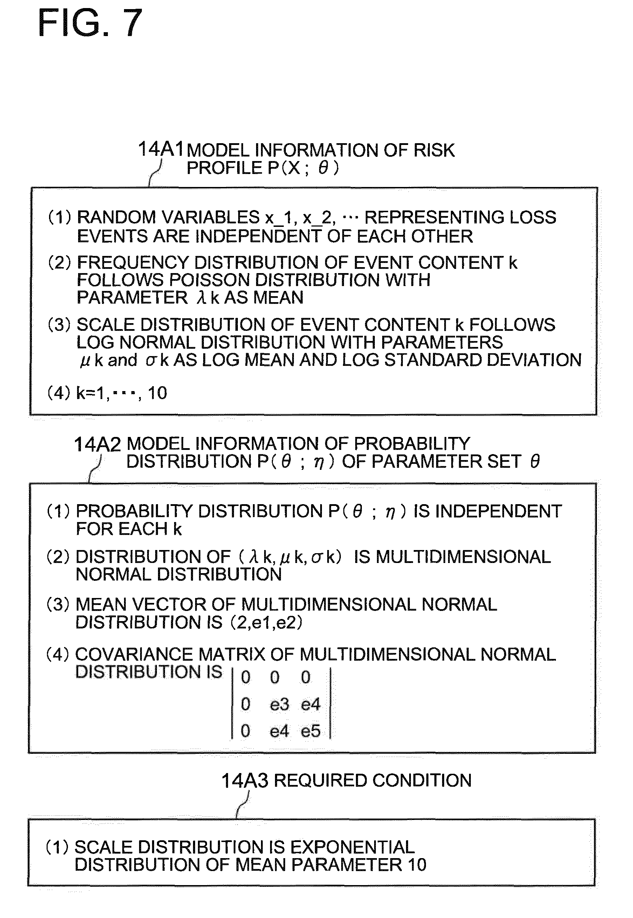

With reference to Fig. 7, the model information 14A1 of the risk profile P(X;θ) included in the input information 14A defines the risk profile P(X;θ) by the following four information:

(1) random variables $x\square 1$, $x\square 2$, ... representing loss events are independent of each other;
(2) a frequency distribution of an event content k follows a Poisson distribution with a parameter $\lambda k$ as a mean;
(3) a scale distribution of the event content k follows a log normal distribution with parameters $\mu k$ and $\sigma k$ as a log mean and a log standard deviation;
(4) k = 1 to 10.

In this case, θ becomes a set of 30 parameters in total including $\lambda k$, $\mu k$ and $\sigma k$ (k = 1 to 10).

Further, with reference to Fig. 7, the model information 14A2 of the probability distribution P(θ;η) included in the input information 14A defines the probability distribution P(θ;η) by the following four information:

(1) the probability distribution P(θ;η) is independent for each k;
(2) a distribution of ($\lambda k$, $\mu k$, $\sigma k$) is a multidimensional normal distribution;
(3) a mean vector of the abovementioned multidimensional normal distribution is (2,e1,e2); and
(4) a covariance matrix of the abovementioned multidimensional normal distribution is ((0,0,0),(0,e3,e4)(0,e4,d5)).

In this case, η becomes a set of five parameters in total including e1 to e5.

The reason for fixing the first component of the mean vector of the multidimensional normal distribution to a value of 2 and fixing the first row and the first column of the covariance matrix to a value of 0 is that it is desired to set the mean of the numbers of events having the event content k to 2. That is to say, it is because when the mean of the numbers of events having the event content k is 2, Ak takes only a value of 2, which is that, in parameters of a multidimensional normal distribution, the relevant element (the first component) of the mean vector becomes a value of 2 and the relevant row and the relevant column of the covariance matrix becomes a value of 0.

Further, with reference to Fig. 7, the required condition included in the input information 14A designates the following condition:

(1) a scale distribution is an exponential distribution of a mean parameter 10.

When the input information 14A as shown in Fig. 7 is stored into the storing unit 14 by the input storing unit 15A, the generator distribution regulating unit 15B determines an optimum parameter set η by the procedure shown in Fig. 6. That is to say, the generator distribution regulating unit 15B regulates η so that an objective function becomes small by using, for example, the mean of divergence (e.g., KL divergence, mean squared error in a specific interval of a density function, or the like) between a scale distribution of risk profiles P(X;θ) actually generated in accordance with a generator distribution P(θ;η) and the scale distribution (the exponential distribution of mean 10) designated by the required condition, as the objective function. In this example, it is easy to generate θ in accordance with η because it is enough to generate normal random numbers under a given distribution parameter. Moreover, the scale distribution of P(X;θ) in θ thus obtained becomes a mixture distribution of ten log normal components, and it can be easily realized by a known technique to calculate the divergence between the mixture distribution and the exponential distribution of mean 10. Thus, because it is possible to easily calculate the value of an objective function with respect to any η, it is possible to solve the optimization problem by the known technique.

Assuming the parameter of the generator distribution regulated by the generator distribution regulating unit 15B in the above manner is expressed as η*, η* is stored as the interim information 14B into the storing unit 14.

Next, the risk profile sampling unit 15C generates a necessary number of parameters θ = (($\lambda 1$,$\mu 1$,$\sigma 1$), ..., ($\lambda 10$,$\mu 10$,$\sigma 10$)) of a risk profile in accordance with a generator distribution P(θ;η*), and stores as the output information 14C into the storing unit 14. The risk profile P(X;θ) having the thus generated θ satisfies the required condition as much as possible.

After that, the output formatting means 15D outputs the parameters θ of the risk profile to the outside.

In the above description, they are examples introduced to facilitate the description that the number of kinds of events is 10, the number of events follows a Poisson distribution, and the amount of loss follows a log normal distribution, but do not limit the present invention. The risk is not limited to an operational risk, and the present invention can be applied to other risks. Moreover, this exemplary embodiment can be changed in the following manner.

[Modified Example of First Exemplary Embodiment]

The generator distribution regulating unit 15B may have a function of interpreting indispensable conditions in the input information 14A, and generating model information of a risk profile $P(X;\theta)$ used for solution of an optimization problem and model information of a probability distribution $P(\theta;\eta)$ of a parameter set $\theta$, from the model information 14A1 of the risk profile $P(X;\theta)$ and the model information 14A2 of the probability distribution $P(\theta;\eta)$ of the parameter set $\theta$ in the input information 14A, so that the indispensable conditions are satisfied.

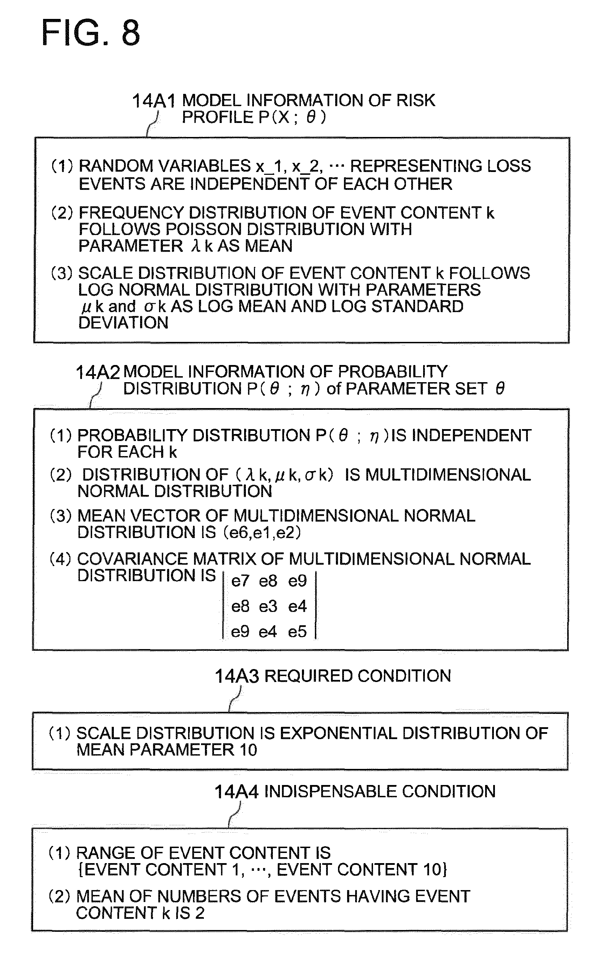

For example, the generator distribution regulating unit 15B may have a function of generating the model information 14A1 and 14A2 in the input information 14A shown in Fig. 7, from the input information 14A as shown in Fig. 8.

The input information 14A shown in Fig. 8 includes indispensable conditions 14A4 as shown below:

(1) the range of event content is {event content 1, ... , event content 10}; and
(2) the mean of the numbers of events having event content k is 2.

The generator distribution regulating unit 15B recognizes that the range of event content is 10 from the indispensable condition (1), and adds information k=1, ..., k=10 to the model information 14A1A of the risk profile $P(X;\theta)$ in Fig. 8, thereby generating the model information 14A1A shown in Fig. 7.

Further, the generator distribution regulating unit 15B interprets the indispensable condition (2), determines that the first component of the mean vector of the multidimensional normal distribution of $(\lambda k, \mu k, \sigma k)$ in the model information 14A2 of the probability distribution $P(\theta;\eta)$ of the parameter set $\theta$ has a value of 2 and the first row and the first column of the covariance matrix have a value of 0, and determines that a parameter e6 in the model information 14A2A in Fig. 8 is 2 and parameters e7, e8 and e9 are 0, thereby generating the model information 14A2 shown in Fig. 7.

Further, as another modified example, the output formatting unit 15D may have a function of outputting information as shown below, instead of the value of the parameter set $\theta$ included in the output information 14C or in addition to the value of the parameter set $\theta$, to the screen displaying unit 13 or outputs through the communication I/F unit 11.

For example, the output formatting unit 15D outputs a set of X sampled in accordance with a risk profile $P(X;\theta)$ with the value of a parameter set $\theta$ included in the output information 14C substituted into the model information 14A1. Alternatively, the output formatting unit 15D may output feature values of a scale distribution and a frequency distribution of an event content $A^c$ and a feature value such as VaR of the risk profile $P(X;\theta)$, or as a special case, may output the feature values of the frequency distribution and the scale distribution of each event content together with the event content. Moreover, the output formatting unit 15D may output them in combination. A more specific description will be made below.

For example, assuming that the frequency distribution of the event content $A^c$ is a Poisson distribution, the scale distribution of the event content $A^c$ is a normal distribution with a mean parameter $\theta s\square\mu^c$ and a standard deviation parameter $\theta s\square\sigma^c$, the range of event contents is {$A^1$, $A^2$} = {Tokai earthquake, bank transfer scam}, and $\theta = (\theta f^1, \theta s\square\mu^1, \theta s\square\sigma^1, \theta f^2, \theta s\square\mu^2, \theta s\square\sigma^2)$, finally obtained $\theta$ shall be a value of $\theta$ = (1, 3, 200 million, 30 million, 1 million, 0.5 million). That is to say, a risk profile $P(X;\theta)$ is generated such that the frequency distribution of Tokai earthquake is a Poisson distribution with a mean of 1, the scale distribution of Tokai earthquake is a normal distribution with a mean of 200 million and a standard deviation of 30 million, the frequency distribution of bank transfer scam is a Poisson distribution with a mean of 3, the scale distribution of bank transfer scam is a normal distribution with a mean of 1 million and a standard deviation of 0.5 million.

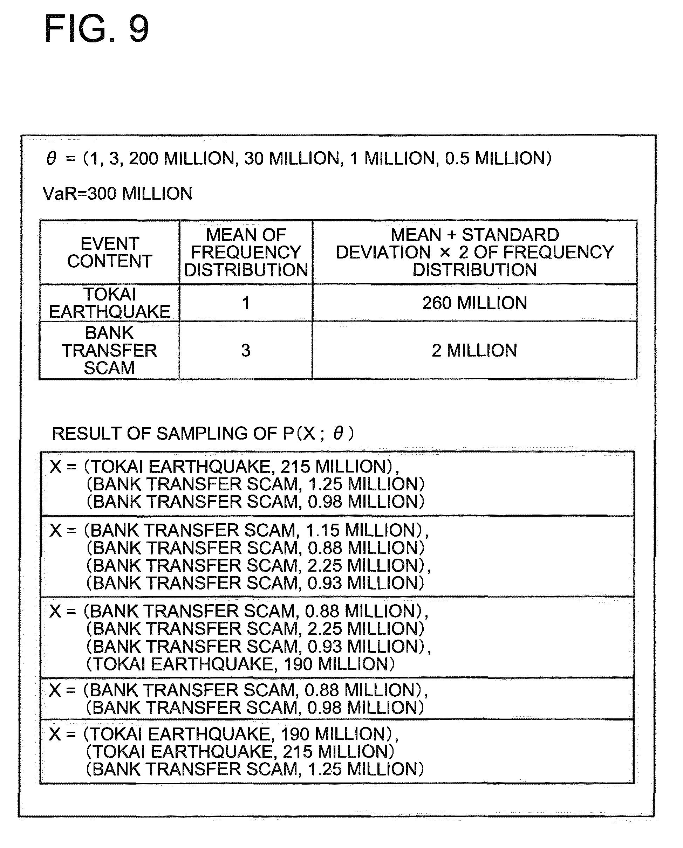

In this case, the output formatting unit 15D may output the generated value of $\theta$ as it is, or may output a feature value such as VaR of $P(X;\theta)$. Moreover, the output formatting unit 15D may output the result of sampling from $P(X;\theta)$, the mean as a feature value of a frequency distribution of an event content, the mean + standard deviation $\times$ 2 (this become a mean having a safety margin for 2 sigma) as a feature value of a scale distribution, and additionally the event content, in a form as shown in Fig. 9. Needless to say, the output formatting unit 15D may output any value as a feature value. For example, the output formatting unit 15D may output a desired one of feature values of $P(X;\theta)$ other than the feature values of the frequency distribution and scale distribution of the event content. In order to calculate a feature value that it is desired to output from $P(X;\theta)$, the output formatting unit 15D is made to have a function of calculating it. When there are a plurality of $\theta$, it is desirable to output after classifying feature values relating to different $\theta$ so that they can be clearly distinguished. Moreover, the output formatting unit 15D may output the value of $\eta$

[Second Exemplary Embodiment]

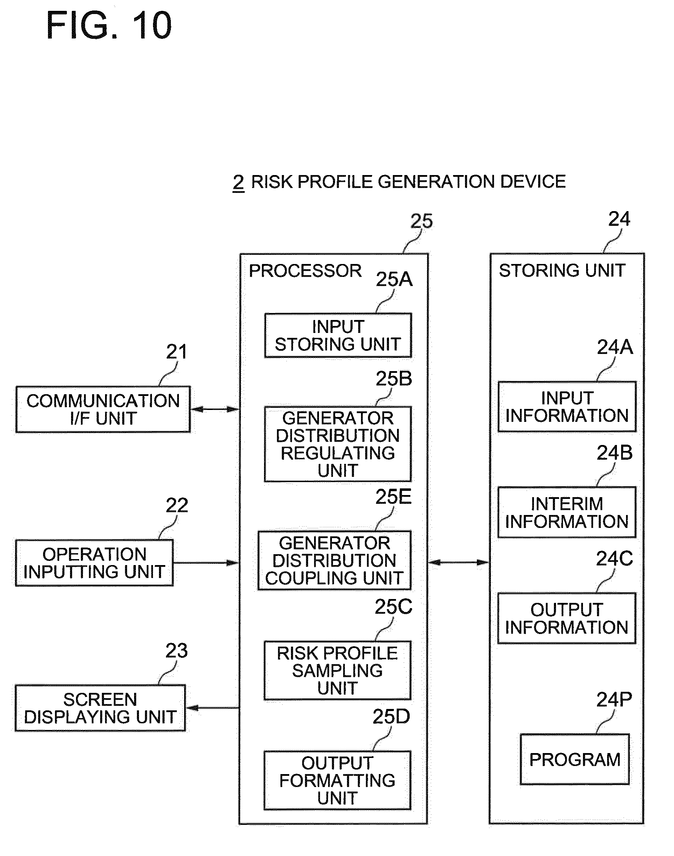

Next, with reference to Fig. 10, a risk profile generation device 2 according to a second exemplary embodiment of the present invention will be described in detail.

The risk profile generation device 2 according to this exemplary embodiment has a function of generating many risk profiles that almost satisfy a specific condition.

This risk profile generation device 2 has, as major function units, a communication I/F unit 21, an operation inputting unit 22, a screen displaying unit 23, a storing unit 24, and a processor 25.

The communication I/F unit 21, the operation inputting unit 22 and the screen displaying unit 23 have the same functions as the communication I/F unit 11, the operation inputting unit 12 and the screen displaying unit 13 shown in Fig. 1 of the first exemplary embodiment.

The storing unit 24 is formed by a storage device such as a hard disk and a semiconductor memory, and has a function of storing processing information necessary for various kinds of processing by the processor 25 and a program 24P. The program 24P is a program loaded into and executed by the processor 25 to realize various kinds of processing units, and is previously loaded from an external device (not shown) or a computer-readable storage medium (not shown) via a data input/output function such as the communication I/F unit 21 and stored into the storing unit 24. Major processing information stored in the storing unit 24 is input information 24A, interim information 24B, and output information 24C.

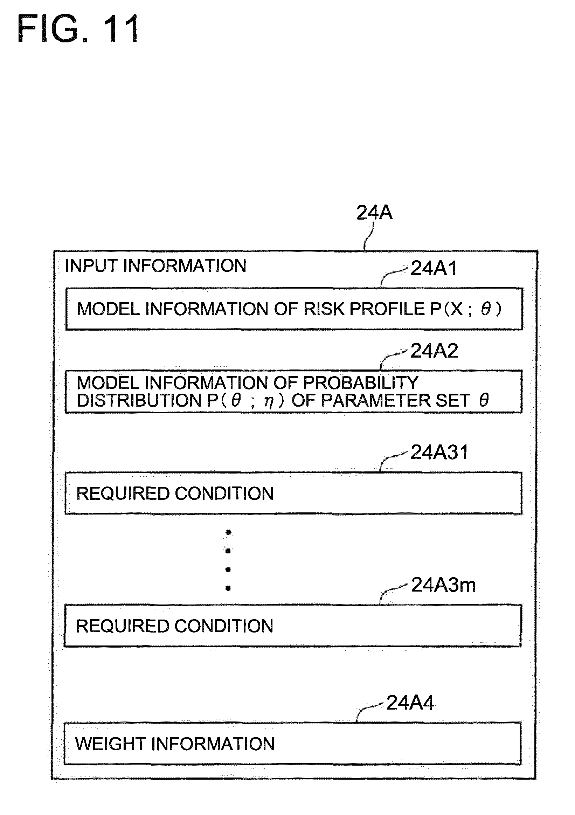

The input information 24A is information inputted from the communication I/F unit 21 and the operation inputting unit 22. Fig. 11 is an example of the configuration of the input information 24A. The input information 24A of this example is composed of model information 24A1 of a risk profile $P(X;\theta)$, a probability distribution $P(\theta;\eta)$ 24A2 of a parameter set $\theta$, a plurality of required conditions 24A31 to 24A3m, and weight information 24A4.

The model information 24A1 of the risk profile $P(X;\theta)$, the probability distribution $P(\theta;\eta)$ 24A2 of the parameter set $\theta$, and the required conditions 24A31 to 24A3m are the same as the model information 14A1 and 14A2 and the required condition 14A3 shown in Fig. 2 in the first exemplary embodiment. However, in this exemplary embodiment, two or more required conditions exist.

The weight information 24A4 is a weighting factor for each of the required conditions 24A31 to 24A3. The sum of all of the weighting factors is equal to 1. Moreover, when a new probability distribution $P(\theta|\eta\square N)$ is generated by internal division, a weighting factor has a value equal to or more than 0 and equal to or less than 1. Moreover, when a new probability distribution $P(\theta|\eta\square N)$ is generated by external division, a weighting factor has a value other than the value equal to or more than 0 and equal to or less than 1.

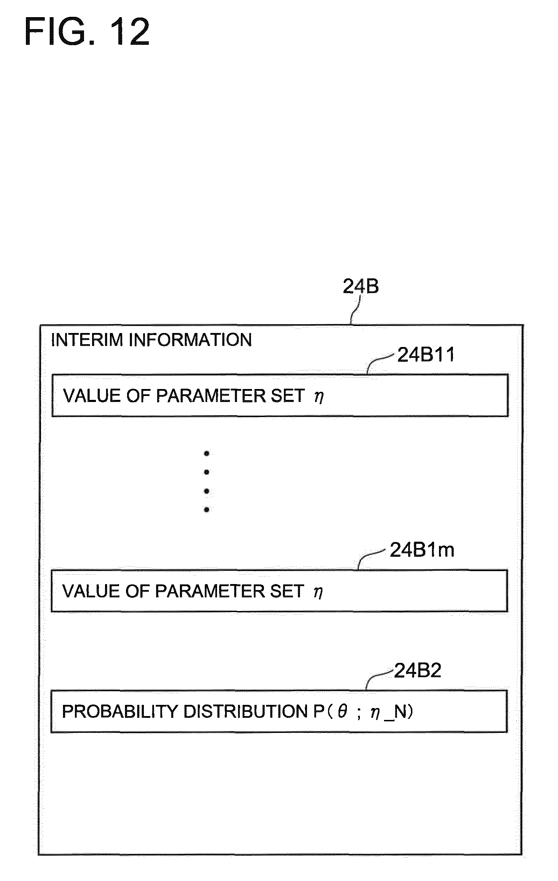

The interim information 24B is interim information generated in the process of calculation by the processor 25. Fig. 12 is an example of the configuration of the interim information 24B. The interim information 24B in this example is composed of a plurality of values 24B11 to 24B1m of a parameter set $\eta$, and a probability distribution $P(\theta|\eta\square N)$ 24B2 generated based on the plurality of values 24B11 to 24B1m of the parameter set $\eta$ and the weight information 24A4.

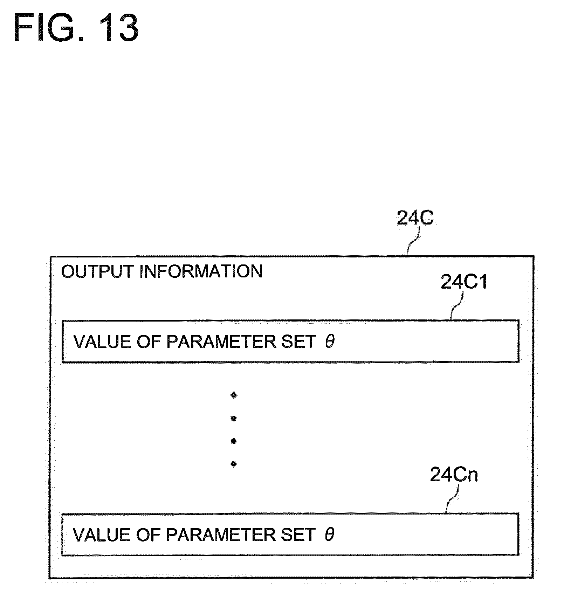

The output information 24C is information on a risk profile generated in the calculation by the processor 25. Fig. 13 is an example of the configuration of the output information 24C. The output information 24C in this example is composed of a plurality of values 24C1 to 24Cn of the parameter set $\theta$.

The processor 25 has a microprocessor such as a CPU and a peripheral circuit thereof, and has a function of loading the program 24P from the storing unit 24 and executing to realize various kinds of processing units by causing the hardware and the program 24P to work in cooperation with each other. Major processing units realized by the processor 25 are an input storing unit 25A, a generator distribution regulating unit 25B, a risk profile sampling unit 25C, an output formatting unit 25D, and a generator distribution coupling unit 25E.

The input storing unit 25A has a function of storing information inputted from the communication I/F unit 21 or the operation inputting unit 22 as the input information 24A into the storing unit 24, in the same manner as the input storing unit 15A of the first exemplary embodiment.

The generator distribution regulating unit 25B, in the same manner as the generator distribution regulating unit 15B of the first exemplary embodiment, has a function of loading the input information 24A and calculating a value of the parameter set $\eta$ in the model information 24A2 such that a risk profile specified by applying values of the parameter set $\theta$ generated in accordance with a probability distribution $P(\theta;\eta)$ to the model information 24A1 satisfies the required conditions with a higher probability. However, the generator distribution regulating unit 25B calculates, for each of the required conditions 24A31 to 24A3m, values 24B11 to 24B1m of the parameter set $\eta$ that satisfy the required condition with a higher probability, and stores as the interim information 24B into the storing unit 24.

The generator distribution coupling unit 25E has a function of loading the input information 24A and the interim information 24B and generating a probability distribution $P(\theta|\eta\square N)$ from the values 24B11 to 24B1m of the parameter set $\eta$ calculated for the respective required conditions and the weight information 24A4.

When it is supposed to describe the respective weights of the required conditions 24A31 to 24A3m as $W\square 1$ to $W\square m$, describe the values 24B11 to 24B1m of the parameter set $\eta$ calculated for the required conditions 24A31 to 24A3m as $\eta\square 1$ to $\eta\square m$, and describe probability distributions such that $\eta\square 1$ to $\eta\square m$ are applied to the model information 24A2 of the probability distribution as P(θ;η□1) to P(θ;η□m), the generator distribution coupling unit 25E generates the probability distribution P(θ|η□N) by methods as described below, for example.

(1) Generation by Coupling Parameters

In this generation method, a value obtained by weighted summation of the values of the parameter set η calculated for the respective required conditions by using the weighting factors is applied to model information of a probability distribution, whereby the probability distribution of the parameter set θ is generated:

$$\text{Probability distribution } P(\theta|\eta\Box N) = P(\theta|\eta\Box 1 \times W\Box 1 +, \dots, + \eta\Box m \times W\Box m),$$

where the weighted summation of the parameters is executed on the same kind of parameters. For example, assuming one parameter in the parameter set q defined by the model information 24A2 of the probability distribution P(θ;η) is e1 and parameters corresponding to the e1 in η□1 to η□m are e11 to e1m, the value of the e1 of the probability distribution P(θ|η□N) is calculated as e11×W□1 +, ..., + e1m×W□m.

(2) Generation by Mixture of Distributions

In this generation method, probability distributions of the parameter set θ for the respective required conditions generated by applying the values of the parameter set η calculated for the respective required conditions to model information of a probability distribution are mixed by using the weighting factors, whereby the probability distribution of the parameter set θ is generated:

$$\text{Probability distribution } P(\theta|\eta\Box N) = P(\theta|\eta\Box 1) \times W\Box 1 +, \dots, + P(\theta|\eta\Box m) \times W\Box m.$$

(3) Generation by Exponential Mixture of Distributions

In this generation method, probability distributions of the parameter set θ for the respective required conditions generated by applying the values of the parameter set η calculated for the respective required conditions to model information of a probability distribution are subjected to exponential mixture by using the weighting factors, whereby the probability distribution of the parameter set θ is generated:

$$\text{Probability distribution } P(\theta|\eta\Box N) = P(\theta|\eta\Box 1)\hat{}W\Box 1 \times, \dots, \times P(\theta|\eta\Box m)\hat{}W\Box m \times C(\eta\Box N),$$

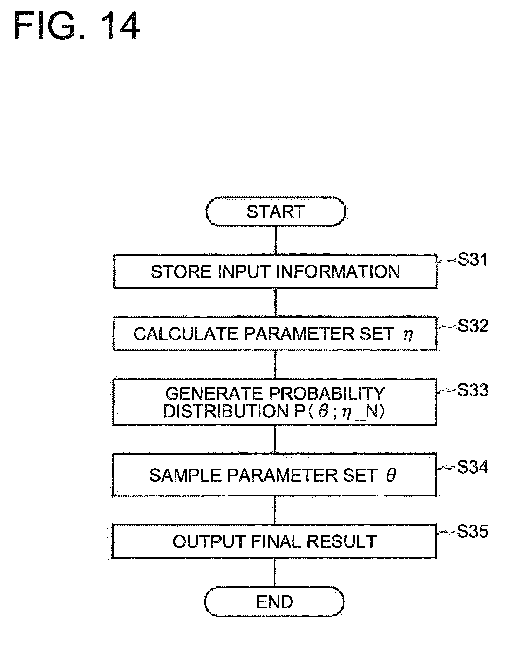

where C(η□N) is a normalization constant by which the sum of all probabilities becomes 1.
The risk profiling sampling unit 25C has a function of loading the interim information 24B and repeatedly generating a value of the parameter set θ in accordance with the probability distribution P(θ|η□N) in the interim information 24B. Generation of the value in accordance with a specific probability distribution may be performed by any method. Because performing sampling based on the distribution P(θ;η□N) of a random variable θ, the risk profiling sampling unit 25C can generally obtain different θ every time performing the sampling. Moreover, the risk profile sampling unit 25C has a function of storing the generated values 24C1 to 24Cn of the parameter set θ as the output information 24C into the storing unit 24.
The output formatting unit 25D has a function of loading the values of the parameter set θ included in the output information 24C, and outputting as a final result to the screen displaying unit 23 or to the outside via the communication I/F unit 21. The output formatting unit 25D may output for what generation distribution the result is, the value of the weighting factor, and so on, as additional information. Moreover, in the same manner as described in the modified example of the first exemplary embodiment, the output formatting unit 25D may have a function of outputting another kind of data, instead of the values of the parameter set θ or in addition to the values of the parameter set θ, to the screen displaying unit 23 or to the outside via the communication I/F unit 21.
Next, with reference to Fig. 14, an operation of the risk profile generation device 2 according to this exemplary embodiment will be described.
First, the input storing unit 25A inputs therein the model formula 24A1 of the risk profile P(X;θ), the model formula 24A2 of the probability distribution $P(\theta;\eta)$ of the parameter set $\theta$, the plurality of required conditions 24A31 to 24A3m and the weight information 24A4 from the communication I/F unit 21 or the operation inputting unit 22, and stores as the input information 24A into the storing unit 24 (step S31).

Next, the generator distribution regulating unit 25B: loads the model formula 24A1 of the risk profile $P(X;\theta)$, the model formula 24A2 of the probability distribution $P(\theta;\eta)$ of the parameter set $\theta$ and the plurality of required conditions 24A31 to 24A3m from the storing unit 24; for the respective required conditions 24A31 to 24A3m, calculates the values of 24B11 to 24B1m of the parameter set $\eta$ such that the risk profile $P(X;\theta)$ determined by values of the parameter set $\theta$ generated in accordance with the probability distribution $P(\theta;\eta)$ satisfies the required conditions with a higher probability; and stores as the interim information 24B into the storing unit 24 (step S32).

Next, the generator distribution coupling unit 25E loads the input information 24A and the interim information 24B, generates a new probability distribution $P(\theta|\eta\square N)$ from the values 24B11 to 24B1m of the parameter set $\eta$ calculated for the respective required conditions, and stores as the output information 24C into the storing unit 24 (step S33).

Next, the risk profile sampling unit 25C loads the generated probability distribution $P(\theta|\eta\square N)$, repeatedly generates values of the parameter set $\theta$ in accordance with the probability distribution $P(\theta|\eta\square N)$, and stores the generated values 24C1 to 24Cn of the parameter set $\theta$ as the output information 24C into the storing unit 24 (step S34).

Finally, the output formatting unit 25D loads the generated values 24C1 to 24Cn of the parameter set $\theta$ from the storing unit 24, and outputs as a final result to the screen displaying unit 23 or to the outside via the communication I/F unit 21 (step S35).

Thus, in this exemplary embodiment: a probability distribution $P(\theta;\eta)$ of a parameter set $\theta$ is used ($\eta$ is the parameter of this probability distribution); for each of the required conditions 24A31 to 24A3m, a parameter set $\eta$ such that a probability that the parameter set $\theta$ satisfies the required condition becomes higher is calculated; a new probability distribution $P(\theta;\eta N)$ is generated from the parameter sets $\eta$ calculated for the respective required conditions and the weights for the respective required conditions; and the parameter set $\theta$ is generated in accordance with the generated probability distribution $P(\theta;\eta N)$. Accordingly, it is possible to generate many risk profiles satisfying a specific condition within a practical time with a realistic resource. The reasons are as shown below:

(1) because the number of parameters configuring the parameter set $\eta$ is made to be smaller than that of the parameter set $\theta$, it is possible to regulate the parameter set $\eta$ for each required condition within a practical time with a realistic resource;

(2) generation of the probability distribution $P(\theta;\eta N)$ from the parameter sets $\eta$ calculated for the respective required conditions and the weights for the respective required conditions, and sampling of the parameter set $\theta$ in accordance with this probability distribution $P(\theta;\eta N)$ can be performed with a realistic resource; and

(3) once generating the probability distribution $P(\theta;\eta N)$, it is possible only by repeatedly sampling the parameter set $\theta$ according to the probability distribution $P(\theta;\eta N)$ to obtain various parameter sets $\theta$ that satisfy, with a high probability, a specific condition determined by combination of the plurality of required conditions 24A31 to 24A3m, the weight information 24A4 therefor and a method for generating the probability distribution $P(\theta;\eta N)$, namely, various risk profiles $P(X;\theta)$.

Next, with a specific example, the operation in this exemplary embodiment will be described in more detail.

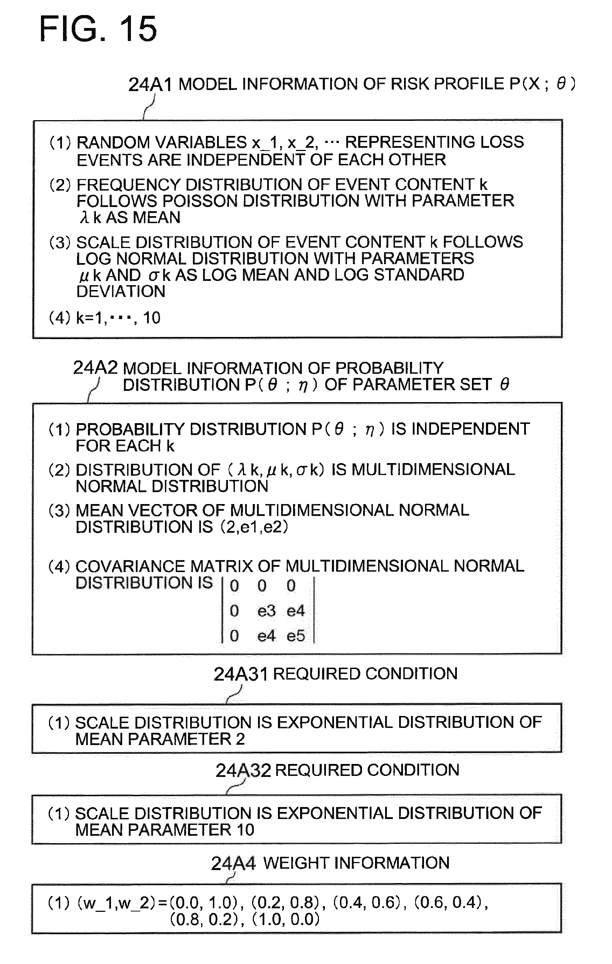

A specific example of the input information 24A is shown in Fig. 15. With reference to Fig. 15, the model information 24A1 of the risk profile $P(X;\theta)$ and the model information 24A2 of the probability distribution $P(\theta;\eta)$ are the same as the model information 14A1 of the risk profile $P(X;\theta)$ and the model information 14A2 of the probability distribution $P(\theta;\eta)$ in Fig. 7 showing the specific example of the first exemplary embodiment.

Further, in the input information 24A, the following two required conditions 24A31 and 24A32 are designated:

(1) a scale distribution is an exponential distribution of a mean parameter 2; and
(2) a scale distribution is an exponential distribution of a mean parameter 10.

Further, in the weight information 24A4 of the input information 24A, the following six sets of weighting factors are designated:

(1) $(W\square 1, W\square 2) = (0.0, 1.0)$
(2) $(W\square 1, W\square 2) = (0.2, 0.8)$
(3) $(W\square 1, W\square 2) = (0.4, 0.6)$
(4) $(W\square 1, W\square 2) = (0.6, 0.4)$
(5) $(W\square 1, W\square 2) = (0.8, 0.2)$
(6) $(W\square 1, W\square 2) = (1.0, 0.0)$

When the input information 24A as shown in Fig. 15 is stored into the storing unit 24 by the input storing unit 25A, the generator distribution regulating unit 25B firstly calculates a value $\eta \square 1$ of the parameter set $\eta$ such that the risk profile $P(X;\theta)$ determined by a value of the parameter set $\theta$ generated in accordance with the probability distribution $P(\theta;\eta)$ satisfies the required condition 24A31 with a higher probability, and stores into the storing unit 24. In the same manner, the generator distribution regulating unit 25B calculates a value $\eta \square 2$ of the parameter set $\eta$ such that the risk profile $P(X;\theta)$ determined by a value of the parameter set $\theta$ generated in accordance with the probability distribution $P(\theta;\eta)$ satisfies the required condition 24A32 with a higher probability, and stores into the storing unit 24.

Next, the generator distribution coupling unit 25E generates six probability distributions $P(\theta|\eta\square N1)$ to $P(\theta|\eta\square N6)$ from the values $\eta\square 1$ and $\eta\square 2$ of the parameter set $\eta$ calculated for the required conditions 24A31 and 24A32 and the six sets of weighting factors in the weight information 24A4, and stores as the output information 24C into the storing unit 24.

For example, in the case of using the generation method by coupling of parameters, the generator distribution coupling unit 25E generates the following six probability distributions $P(\theta|\eta\square N1)$ to $P(\theta|\eta\square N6)$:

$$\text{probability distribution } P(\theta|\eta\square N1) = P(\theta|\eta\square 1\times 0 + \eta\square 2\times 1) = P(\theta|\eta\square 2)$$

$$\text{probability distribution } P(\theta|\eta\square N2) = P(\theta|\eta\square 1\times 0.2 + \eta\square 2\times 0.8)$$

$$\text{probability distribution } P(\theta|\eta\square N3) = P(\theta|\eta\square 1\times 0.4 + \eta\square 2\times 0.6)$$

$$\text{probability distribution } P(\theta|\eta\square N4) = P(\theta|\eta\square 1\times 0.6 + \eta\square 2\times 0.4)$$

$$\text{probability distribution } P(\theta|\eta\square N5) = P(\theta|\eta\square 1\times 0.8 + \eta\square 2\times 0.2)$$

$$\text{probability distribution } P(\theta|\eta\square N6) = P(\theta|\eta\square 1\times 1 + \eta\square 2\times 0) = P(\theta|\eta\square 1).$$

Further, for example, in the case of using the generation method by mixture of distributions, the generator distribution coupling unit 25E generates the following six probability distributions $P(\theta|\eta\square N1)$ to $P(\theta|\eta\square N6)$:

$$\text{probability distribution } P(\theta|\eta\square N1) = P(\theta|\eta\square 1)\times 0 + P(\theta|\eta\square 2)\times 1 = P(\theta|\eta\square 2)$$

$$\text{probability distribution } P(\theta|\eta\square N2) = P(\theta|\eta\square 1)\times 0.2 + P(\theta|\eta\square 2)\times 0.8$$

$$\text{probability distribution } P(\theta|\eta\square N3) = P(\theta|\eta\square 1)\times 0.4 + P(\theta|\eta\square 2)\times 0.6$$

$$\text{probability distribution } P(\theta|\eta\square N4) = P(\theta|\eta\square 1)\times 0.6 + P(\theta|\eta\square 2)\times 0.4$$

$$\text{probability distribution } P(\theta|\eta\square N5) = P(\theta|\eta\square 1)\times 0.8 + P(\theta|\eta\square 2)\times 0.2$$

$$\text{probability distribution } P(\theta|\eta\square N6) = P(\theta|\eta\square 1)\times 1 + P(\theta|\eta\square 2)\times 0 = P(\theta|\eta\square 1).$$

Further, for example, in the case of using the generation method by exponential mixture of distributions, the generator distribution coupling unit 25E generates the following six probability distributions $P(\theta|\eta\square N1)$ to $P(\theta|\eta\square N6)$:

probability distribution $P(\theta|\eta\square N1) = P(\theta|\eta\square 1)\hat{}0 \times P(\theta|\eta\square 2)\hat{}1 \times C(\eta\square N1) = P(\theta|\eta\square 2) \times C(\eta\square N1)$

probability distribution $P(\theta|\eta\square N2) = P(\theta|\eta\square 1)\hat{}0.2 \times P(\theta|\eta\square 2)\hat{}0.8 \times C(\eta\square N2)$

probability distribution $P(\theta|\eta\square N3) = P(\theta|\eta\square 1)\hat{}0.4 \times P(\theta|\eta\square 2)\hat{}0.6 \times C(\eta\square N3)$

probability distribution $P(\theta|\eta\square N4) = P(\theta|\eta\square 1)\hat{}0.6 \times P(\theta|\eta\square 2)\hat{}0.4 \times C(\eta\square N4)$

probability distribution $P(\theta|\eta\square N5) = P(\theta|\eta\square 1)\hat{}0.8 \times P(\theta|\eta\square 2)\hat{}0.2 \times C(\eta\square N5)$

probability distribution $P(\theta|\eta\square N6) = P(\theta|\eta\square 1)\hat{}1 \times P(\theta|\eta\square 2)\hat{}0 \times C(\eta\square N6) = P(\theta|\eta\square 1) \times C(\eta\square N6)$.

Next, for each of the six probability distributions $P(\theta|\eta\square N1)$ to $P(\theta|\eta\square N6)$, the risk profile sampling unit 25C generates a necessary number of parameters $\theta$ of the risk file, $= ((\lambda 1,\mu 1,\sigma 1), ..., (\lambda 10,\mu 10,\sigma 10))$ in accordance with the probability distributions, and stores as the output information 24C into the storing unit 24.

After that, the output formatting unit 25D outputs the parameters $\theta$ of the risk profile to the outside.

As apparent from the specific example described above, according to this exemplary embodiment, by using a plurality of weighting factors such that the ratios of weighting factors corresponding to the plurality of required conditions 24A31 to 24A3m are slightly different from each other, it is possible to efficiently generate many risk profiles such that conditions to satisfy are slightly different from each other.

In actual risk analysis, an operation of generating a risk profile satisfying a specific condition is repeatedly executed by changing the condition little by little, so that it is possible to increase the efficiency of such an operation according to this exemplary embodiment.

[Third Exemplary Embodiment]

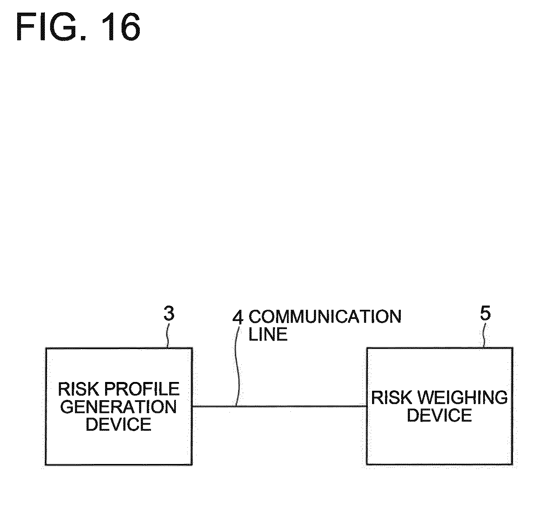

With reference to Fig. 16, a risk profile generation device 3 according to a third exemplary embodiment of the present invention is connected to a risk weighing device 5 via a communication line 4. The risk profile generation device 3 according to this exemplary embodiment has, in addition to the function of generating a risk profile that almost satisfies a specific condition, a function of testing the accuracy of estimation of the risk weighing device 5 by the generated risk profile.

The risk weighing device 5 is a device which inputs therein fragmentary information on a risk profile P(X), weighs (estimates) a feature value (e.g., VaR) of the risk profile P(X) from this inputted data, and outputs. In the actual use environment of the risk weighing device 5, fragmentary information inputted into the risk weighing device 5 is on an unknown risk profile P(X). However, it is impossible to judge the accuracy of weighing of the risk weighing device 5 by using fragmentary information on an unknown risk profile P(X). It is because, when a risk profile is unknown, a correct value thereof is also unknown. Then, in the test environment of the risk weighing device 5, as fragmentary information inputted into the risk weighing device 5, information on a known risk profile P(X), namely, a risk profile generated by the risk profile generation device 3 is used.

The risk profile generation device 3 has the same risk profile generation function as the risk profile generation devices 1 and 2 according to the first and second exemplary embodiments. Moreover, the risk profile generation device 3 has a function of calculating inputting test data and a correct value of a risk amount from a generated risk profile, a function of inputting the calculated inputting test data into the risk weighing device 5 via the communication line 4, and a function of comparing the risk mount outputted from the risk weighing device 5 and the correct value of the risk amount calculated from the risk profile.

The communication line 4 is formed by a communication cable, a LAN, a WAN, the Internet, or the like.

Below, the risk profile generation device 3 will be described in detail.

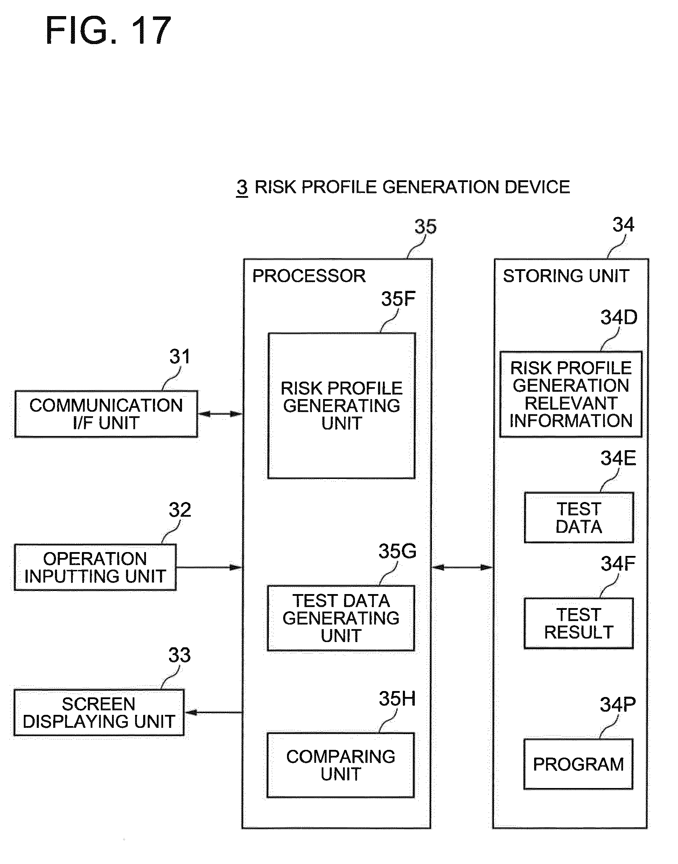

With reference to Fig. 17, the risk profile generation device 3 has, as major function units, a communication I/F unit 31, an operation inputting unit 32, a screen displaying unit 33, a storing unit 34, and a processor 35.

The communication I/F unit 31, the operation inputting unit 32 and the screen displaying unit 33 have the same functions as the communication I/F unit 11, the operation inputting unit 12 and the screen displaying unit 13 in Fig. 1 in the first exemplary embodiment.

The storing unit 34 is formed by a storage device such as a hard disk and a semiconductor memory, and has a function of storing processing information necessary for various kinds of processing by the processor 35 and a program 34P. The program 34P is a program loaded into and executed by the processor 35 to realize various kinds of processing units, and previously loaded and stored into the storing unit 34 from an external device (not shown) or a computer-readable storage medium (not shown) via a data input/output function such as the communication I/F unit 31. Major processing information stored in the storing unit 34 is risk profile generation relevant information 34D, test data 34E, and a test result 34F.

The risk profile generation relevant information 34D is the same as the input information 14A, the interim information 14B and the output information 14C in Fig. 1 in the first exemplary embodiment. Alternatively, the risk profile generation relevant information 34D is the same as the input information 24A, the interim information 24B and the output information 24C in Fig. 10 in the second exemplary embodiment.

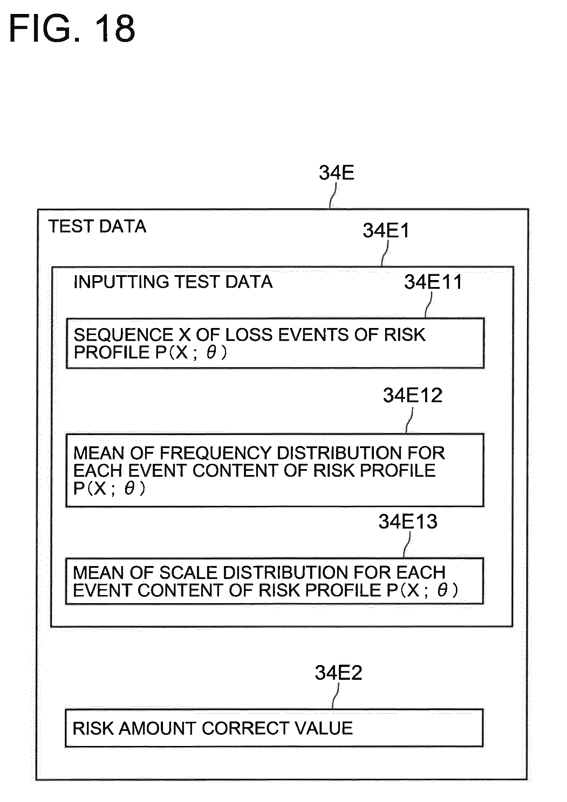

The test data 34E is data used for a test of accuracy of the risk weighing device 5. Fig. 18 shows an example of the configuration of the test data 34E. The test data 34E of this example is composed of inputting test data 34E1 and a correct value 34E2 of a risk amount.

The inputting test data 34E1 is composed of one or more sequences X 34E11 of loss events, a mean 34E12 of a frequency distribution for each event content, and a mean 34E13 of a scale distribution for each event content. All of the data configuring the inputting test data 34E1 are generated based on a risk profile $P(X;\theta)$ generated in the operation by the processor 35. The kind of the inputting test data 34E1 varies depending on what kind of input data on the risk profile $(X;\theta)$ the risk weighing device 5 requires. Therefore, the test data 34E1 is not limited to the data of the kinds shown in Fig. 18.

The risk amount correct value 34E2 is a true risk amount of the risk profile $P(X;\theta)$ generated in the operation by the processor 35. The kind of the risk amount varies depending on what risk amount about the risk profile $(X;\theta)$ the risk weighing device 5 outputs as output data. For example, in a case that the risk weighing device 5 is a device which outputs 99.9% VaR of the risk profile $(X;\theta)$ as a risk amount, the correct value 34E2 of the risk amount is generated.

The test result 34F is the result of a test of the estimation accuracy of the risk weighing device 5 based on a comparison result between the risk amount outputted by the risk weighing device 5 and the correct value 34E2 of the risk amount

The processor 35 has a microprocessor such as a CPU and a peripheral circuit thereof, and has a function of loading the program 34P from the storing unit 34 and executing to cause the hardware and the program 34P to operate in cooperation with each other so as to realize various kinds of processing units. Major processing units realized by the processor 35 are a risk profile generating unit 35F, a test data generating unit 35G, and a comparing unit 35H.

The risk profile generating unit 35F has the respective functions of the input storing unit 15A, the generator distribution regulating unit 15B and the risk profile sampling unit 15C shown in Fig. 1 in the first exemplary embodiment. Alternatively, the risk profile generating unit 35F may have the respective functions of the input storing unit 25A, the generator distribution regulating unit 25B, the risk profile sampling unit 25C and the generator distribution coupling unit 25E shown in Fig. 10 in the second exemplary embodiment.

The test data generating unit 35G has a function of loading the risk profile generation relevant information 34D, calculating the test data 34E of the risk weighing device 5 from a risk profile specified by applying a value of a generated parameter set $\theta$ to model information of a risk profile, and storing into the storing unit 34. Moreover, the test data generating unit 35G has a function of loading the inputting test data 34E1 in the test data 34E from the storing unit 34, and transmitting to the risk weighing device 5 via the communication line 4 by the communication I/F unit 31.

The comparing unit 35H has a function of r a risk amount estimated by the risk weighing device 5 from the communication I/F unit 31, comparing with the correct value 34E2 of the risk amount in the test data 34E stored in the storing unit 34, and storing the test result 34F including the result of the comparison and so on into the storing unit 34D. Moreover, the comparing unit 35H has a function of retrieving the test result 34F from the storing unit 34, and outputting to the screen displaying unit 33 or to the outside through the communication I/F unit 31.

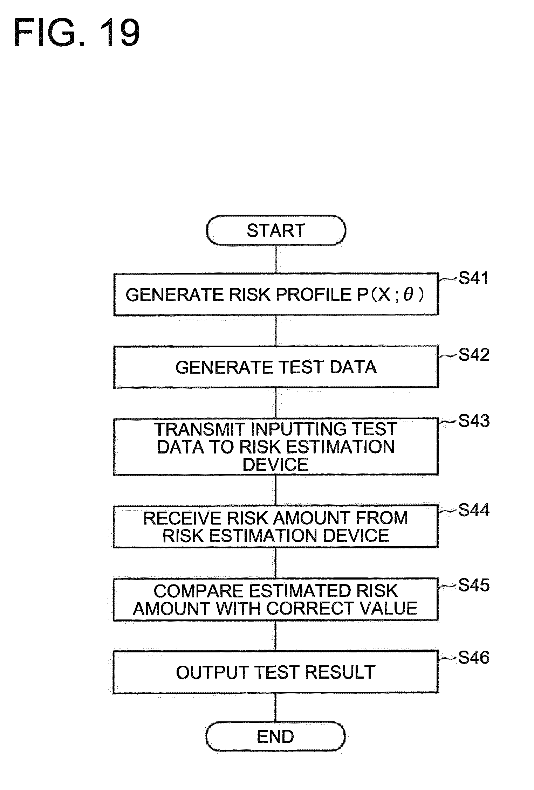

Next, with reference to Fig. 19, an operation of the risk profile generation device 3 according to this exemplary embodiment will be described.

First, the risk profile generating unit 35F executes a process similar to steps S1 to S3 in Fig. 5 in the first exemplary embodiment or steps S31 to 34 in Fig. 14 in the second exemplary embodiment, thereby generating values of a parameter set θ, namely, a risk profile P(X;θ) (step S41).

Next, the test data generating unit 35G generates the test data 34E including the inputting test data 34E1 and the risk amount correct value 34E2 of the risk weighing device 5 from the generated risk profile P(X;θ), and stores into the storing unit 34 (step S42). A process of generating this test data 34E will be described in detail later.

Next, the test data generating unit 35G transmits the generated inputting test data 34E1 to the risk weighing device 5 through the communication line 4 via the communication I/F unit 31 (step S43).

The risk weighing device 5 receives the inputting test data 34E1 transmitted through the communication line 4 from the risk profile generation device 3, estimates a frequency distribution and a scale distribution for each event content from this received inputting test data 34E1, for example, and estimates a risk amount by the estimated frequency distribution and scale distribution. For example, if outputting 99.9% VaR as a risk amount, the risk weighing device 5 estimates the risk amount by the Monte Carlo simulation. In this estimation method, for each event content, the risk weighing device 5 generates the number of events by pseudorandom numbers following the estimated frequency distribution, generates the amount of loss by the generated number by pseudorandom, and obtains the total amount, thereby calculating one total loss distribution, whereby one total loss amount is calculated. The risk weighing device 5 sorts total loss amounts obtained by repeatedly executing this calculation several thousand to several million times in descending order, and calculates the lower 99.9 percentile point as the risk amount. Such a risk weighing method is generally called loss distribution approach. A risk weighing device using the loss distribution approach is described in various literatures such as Patent Document 2.

When the risk weighing device 5 transmits the estimated risk amount to the risk profile generation device 3 via the communication line 4, the comparing unit 35H of the risk profile generation device 3 receives this risk amount through the communication I/F 31 (step S44).

Next, the comparing unit 35H compares the received risk amount with the risk amount correct value 34E2 in the test data 34E, and stores the result of the comparison as the test result 34F into the storing unit 34 (step S45). In the comparison process, the comparing unit 35H performs, for example, comparison of a magnitude relation and calculation of diversity of values. After that, the comparing unit 35H retrieves the test result 34F from the storing unit 34, and displays on the screen displaying unit 33 or outputs to the outside through the communication I/F unit 31 (step S46).

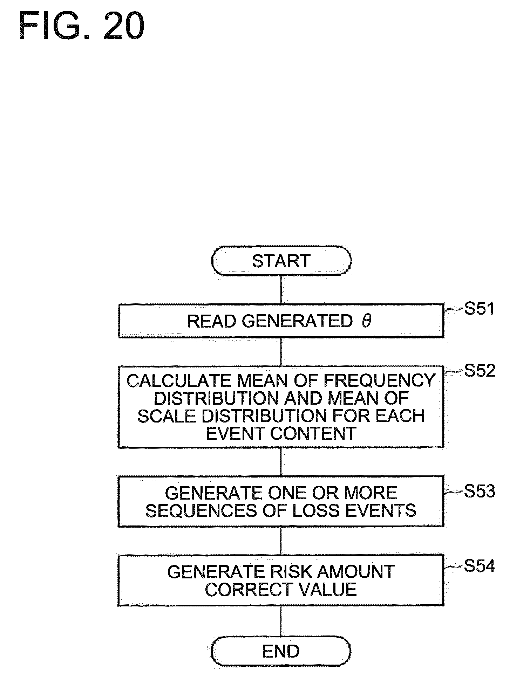

Next, with reference to Fig. 20, a process of generating the test data 34E will be described in detail.

With reference to Fig. 20, the test data generating unit 35G firstly reads the values of the parameter set θ generated by the risk profile generating unit 35F from the risk profile generation relevant information 34D (step S51).

Next, the test data generating unit 35G calculates a mean 34E12 of the frequency distribution and a mean 34E13 of the scale distribution for each event content, and stores as part of the inputting test data 34E1 into the storing unit 34 (step S52). Because the values of the parameter set θ have been determined, the frequency distribution and scale distribution for each event content are uniquely determined by applying the determined values of the parameter set θ to model information of a risk profile P(X;θ). For example, a frequency distribution for each event content of the model information 14A1 of the risk profile P(X;θ) in Fig. 7 is uniquely determined as a Poisson distribution with λk in the parameter set θ as a mean, and a scale distribution for each event content is uniquely determined as a log normal distribution with μk and σk in the parameter set θ as a log mean and a log standard deviation. Therefore, by generating a plurality of pseudorandom numbers following a determined frequency distribution and calculating the mean, it is possible to calculate the mean of the frequency distribution. Moreover, by generating a plurality of pseudorandom numbers following a determined scale distribution and calculating the mean, it is possible to calculate the mean of the scale distribution.

Next, the test data generating unit 35G generates the one or more loss event sequences 34E11, and stores as part of the inputting test data 34E1 into the storing unit 34 (step S53). Because the values of the parameter set θ have been determined as described above, the frequency distribution and the scale distribution for each event content are uniquely determined. By generating the number of times of occurrence of a certain event content by pseudorandom numbers following the frequency distribution, and generating loss amounts of the event content by pseudorandom numbers following the scale distribution by the generated number of times of occurrence, it is possible to generate a sequence of loss events during a holding period of the event content. By executing the same process on all of the event contents and combining all, it is possible to generate sequences of loss events during the holding period. Moreover, by repeatedly executing the process of generating the sequences of loss events during the holding period plural times, it is possible to generate sequences of loss events during a period several times the holding period.

Finally, the test data generating unit 35G generates the risk amount correct value 34E2 and stores into the storing unit 34 (step S54). Because the frequency distribution and the scale distribution for each event content have been determined as described above, it is possible to easily calculate the risk amount correct value. For example, if calculating 99.9% VaR as the risk amount, the test data generating unit 35G calculates by the following procedure, for example. Firstly, the test data generating unit 35G generates the number of events by pseudorandom numbers following the frequency distribution for each event content, generates loss amounts by the generated number by pseudorandom numbers following the frequency distribution, and obtains the total amount thereof, thereby calculating one total loss amount. Next, the test data generating unit 35G sorts total loss amounts obtained by repeatedly executing the abovementioned calculation several thousand to several million times in descending order, and calculates the lower 99.9 percentile point as the risk amount correct value.

Thus, according to the risk profile generation device 3 of this exemplary embodiment, it is possible to generate a risk profile which almost satisfies a specific condition, and test the estimation accuracy of the risk weighing device 5 by using this generated risk profile.

[Modified Example of Third Exemplary Embodiment]

The abovementioned calculation method is one example, and the mean of a frequency distribution and the mean of a scale distribution for each event content, one or more sequences of loss events, and the risk amount correct value may be calculated by another method.

For example, because an event content such that the calculated means of the frequency distribution and the scale distribution are less than preset thresholds has a minor influence on a risk amount of an estimation result, the calculated means may be excluded from the inputting test data 34E1. For the same reason, a loss event such that a loss amount is less than a preset value may be excluded from the generated sequence of loss events.

Further, as the mean of a scale distribution, "mean + standard deviation $\times$ 2" as a mean having a safety margin for 2 sigma may be used.

Further, in actual operation of the risk weighing device 5, data is manually inputted into the risk weighing device 5, and hence, there is a fear that the quality of the inputted data varies, for example, the number of inputted loss event sequences is smaller than a determined number, or any error is mixed in the inputted data. Therefore, for the purpose of testing how accurately the risk weighing device 5 can estimate the risk amount for what quality of data is inputted, the generated inputting test data 34E1 may be processed so as to satisfy an input data quality designated under a test condition inputted through the operation inputting unit 32 or the like. For example, if it is designated that the number of loss event sequences is seven, the mean of a frequency distribution for each event content is inputted as zero by mistake with a probability of 10%, and the mean + 2$\times$standard deviation of a scale distribution is inputted as a 20%-smaller value with a probability of 5%, the test data generating unit 35G may generate seven sequences of loss events, process the means of the frequency distribution and the scale distribution for each event content so as to satisfy a designated condition, and store into the storing unit 34.

Further, in the third exemplary embodiment, a test on the risk weighing device 5 has been performed by generating one risk profile $P(X;\theta)$ that almost satisfies a specific condition (e.g., a scale distribution is an exponential distribution of a mean parameter 2) and generating one test data 34E corresponding to this generated risk profile $P(X;\theta)$. However, the test may be repeatedly performed by generating various risk profiles $P(X;\theta)$ that almost satisfy the specific condition or by generating various test data under a certain risk profile $P(X;\theta)$. In this case, it is not necessary to repeat the whole process described above, and it is enough to repeat only a necessary range of the process. For example, in the case of repeatedly performing the test by using various test data under the same risk profile $P(X;\theta)$, it is enough to repeat steps S42 to S46 in Fig. 19. Moreover, in the case of repeatedly performing the test by generating various risk profiles $P(X;\theta)$ that satisfy the same specific condition, it is enough to repeat from the sampling a parameter 8 following a probability distribution $P(\theta;\eta)$ by using a once optimized parameter set $\eta$. This can also be realized by initially outputting a plurality of results of the sampling of the $\theta$ as an output from the risk profile generating unit 35F.

Further, an example of performing the test under a specific condition (e.g., a scale distribution is an exponential distribution of a mean parameter 2) has been described in the third exemplary embodiment, but the test may be performed many times by changing a specific condition little by little. In this case, by using the risk profile generation method according to the second exemplary embodiment, by which it is possible to efficiently generate many risk profiles $P(X;\theta)$ with conditions slightly different from each other, it is possible to efficiently perform the test. Below, a specific example thereof will be described.

[Specific Example of Test]

For example, a test as described below shall be performed.

(1) inputs into the risk weighing device 5 to be tested are a set of loss event sequences from a risk profile, the mean of a frequency distribution for each event content, and the mean + 2xstandard deviation of a scale distribution;
(2) 50 sets of test data are generated under the same risk profile $P(X;\theta)$ and the test is repeatedly executed thereon;
(3) under a generator distribution $P(\theta;\eta\square N1)$ almost satisfying a condition "a scale distribution is an exponential distribution of a mean parameter 10," a generator distribution $P(\theta;\eta\square N6)$ almost satisfying a condition "a scale distribution is an exponential distribution of a mean parameter 2," and each of generator distributions P(θ;η□N2), P(θ;η□N3), P(θ;η□N4) and P(θ;η□N5) generated by coupling parameters η□2 and η□1 of the generator distributions P(θ;η□N1) and P(θ;η□N6) by a weighting factor, 100 sets of risk profiles P(X;θ) are  generated and the test is repeatedly executed thereon; and

(4) as the quality of the input data, the number of samples is seven, the mean of a frequency distribution for each event content is inputted as zero by mistake with a probability of 10%, and the mean + 2×standard deviation of a scale distribution is inputted as a 20%-smaller value with a probability of 5%.

Firstly, by a method as in the specific example of the second exemplary embodiment, the risk profile generating unit 35F calculates a parameter set η□2, and generates 100 sets of risk profiles P(X;θ) based thereon.

Next, the test data generating unit 35G notes one risk profile P(X;θ) of the 100 sets of risk profiles P(X;θ) having been generated.

Next, the test data generating unit 35G generates first test data 34E with respect to the noted risk profile P(X; θ). Because the number of loss event sequences is defined as seven as the quality of the input data, the test data generating unit 35G generates seven loss event sequences from the noted risk profile P(X;θ). Moreover, the test data generating unit 35G calculates the mean of a frequency distribution for each event content and the mean + 2×standard deviation of a scale distribution from the noted risk profile P(X;θ). At this moment, by artificially generating error inputs as designated by the quality of the input data, the mean of a frequency distribution for each event content becomes zero with a probability of 10%, and the mean + 2×standard deviation of a scale distribution becomes a 20%-smaller value with a probability of 5%. Artificial generation of error inputs can be easily realized with pseudorandom numbers. Moreover, the test data generating unit 35G calculates a risk amount correct value from the noted risk profile P(X;θ). Then, the test data generating unit 35G stores them as the inputting test data 34E1 into the storing unit 34.

Next, the test data generating unit 35G transmits the loss event sequences in the inputting test data 34E1, the mean of the frequency distribution for each event content and the mean + 2×standard deviation of the scale distribution generated with respect to the noted risk profile P(X;θ), to the risk weighing device 5 through the communication line 4 via the communication I/F unit 31.

Next, upon reception of a risk amount transmitted from the risk weighing device 5 from  the communication I/F unit 31, the comparing unit 35H compares with the risk amount correct value in the test data 34E, and stores the result of the comparison as part of the test result 34F into the storing unit 34.

Next, the test data generating unit 35G executes the same process as the first process again. Consequently, with respect to the noted risk profile P(X;θ), generation of second test data 34E and test of the risk weighing device 5 using the data are executed, and the result is recorded into the test result 34F. The same process is repeated until generation of 50th test data 34E and test of the risk weighing device 5 using the data are completed.

When completing the test using the 50 sets of test data on the noted risk profile P(X;θ), the test data generating unit 35G next notes another one risk profile P(X;θ) having not been noted yet among the 100 sets of risk profiles P(X; θ) having been generated. Then, with respect to the newly noted risk profile P(X;θ), the test data generating unit 35G again executes the same process as executed with respect to the previously noted risk profile P(X;θ). Consequently, with respect to the second risk profile P(X;θ), the test using the 50 sets of test data is executed. After that, the same process is repeatedly executed with respect to all of the remaining risk profiles P(X;θ).

When completing the process using the 50 sets of test data with respect to each of the 100 sets of risk profiles P(X;θ) generated based on the parameter set η□2, the risk profile generating unit 35F calculates the parameter set η□1 and generates 100 sets of risk profiles P(X;θ) based on the parameter set η□1 by the same method as in the specific example of the second exemplary embodiment. Then, the test data generating unit 35G repeatedly executes the same process as the process executed on the 100 sets of risk profiles P(X;θ) generated based on the parameter set η□2, on the 100 sets of risk profiles P(X;θ) generated based on the parameter set η□1.

The same process as the process executed with respect to the 100 sets of risk profiles P(X;θ) generated based on the parameter set η□2 or η□1 is repeatedly executed with respect to 100 sets of risk profiles P(X;θ) generated under each of the generator distributions P(θ;η□N2), P(θ;η□N3), P(θ;η□N4) and P(θ;η□N5) generated by coupling the parameters η□2 and η□1 of the generator distributions P(θ;η□N1) and P(θ;η□N6) by a weighting factor. Consequently, the test of the risk weighing device 5 under the abovementioned conditions is  completed.

Finally, the comparing unit 35H displays the test result recorded in the test result 34F on the screen displaying unit 33, or outputs from the communication I/F unit 31. At this moment, the comparing unit 35H may individually output the result of every 50 comparisons with respect to 100 sets of risk profiles P(X;θ) under the same generator distribution P(θ;η), may output an underestimated rate in order to increase the visibility of the 5000 sets of comparison results, or may display a histogram of divergence. Herein, underestimation is a case that a risk amount estimated by the risk weighing device 5 is smaller than a correct value.

The present invention is based upon and claims the benefit of priority from Japanese patent application No. 2011-072742, filed on March 29, 2011, the disclosure of which is incorporated herein in its entirety by reference.

INDUSTRIAL APPLICABILITY

The present invention can be utilized in the field of risk analysis in financial engineering and reliability engineering. To be specific, the present invention is particularly advantageous for generating many risk profiles that almost satisfy a specific condition.

The whole or part of the exemplary embodiments disclosed above can be described as, but not limited to, the following supplementary notes.

(Supplementary Note 1)

A risk profile generation device including:

a storing means for storing model information of a risk profile defined by a first parameter set including one or more parameters, model information of a probability distribution of the first parameter set defined by a second parameter set including one or more parameters, a plurality of required conditions, and weighting factors of the plurality of required conditions;

a generator distribution regulating means for calculating a value of the second parameter set such that a risk profile to be specified by applying a value of the first parameter set generated in accordance with the probability distribution to the model information of the risk profile satisfies the required conditions with a higher probability, for each of the required conditions;

a generator distribution coupling means for generating a probability distribution of the first parameter set from the value of the second parameter set calculated for each of the required conditions, the weighting factors, and the model information of the probability distribution; and

a risk profile sampling means for generating a value of the first parameter set in accordance with the generated probability distribution of the first parameter set.

(Supplementary Note 2)

The risk profile generation device according to Supplementary Note 1, wherein the generator distribution regulating means is configured to solve an optimization problem of finding a value of the second parameter set such that the risk profile specified by applying the value of the first parameter set generated in accordance with the probability distribution to the model information of the risk profile satisfies the required conditions to a maximum degree, thereby calculating the value of the second parameter set satisfying the required conditions with a higher probability.

(Supplementary Note 3)

The risk profile generation device according to Supplementary Note 1 or 2, wherein the model information of the risk profile has model information of a frequency distribution and a scale distribution of each event content defined by the first parameter set.

(Supplementary Note 4)

The risk profile generation device according to any of Supplementary Notes 1 to 3, including:

a test data generating means for calculating inputting test data to be used as an input into a risk weighing device to be tested, and a risk amount correct value, from the risk profile specified by applying the generated value of the first parameter set to the model information of the risk profile; and

a comparing means for transmitting the calculated inputting test data to the risk weighing device, receiving a weighed risk amount from the risk weighing device, and comparing the received risk amount with the risk amount correct value.

(Supplementary Note 5)

The risk profile generation device according to Supplementary Note 4, wherein the inputting test data includes a sequence of loss events according to the risk profile, a mean of a frequency distribution of each event content, and a mean of a scale distribution of each event content.

(Supplementary Note 6)

A risk profile generation method executed by a risk profile generation device including: a storing means for storing model information of a risk profile defined by a first parameter set including one or more parameters, model information of a probability distribution of the first parameter set defined by a second parameter set including one or more parameters, a plurality of required conditions, and weighting factors of the plurality of required conditions; a generator distribution regulating means; a generator distribution coupling means; and a risk profile sampling means, the risk profile generation method including:

by the generator distribution regulating means, calculating a value of the second parameter set such that a risk profile to be specified by applying a value of the first parameter set generated in accordance with the probability distribution to the model information of the risk profile satisfies the required conditions with a higher probability, for each of the required conditions;

by the generator distribution coupling means, generating a probability distribution of the first parameter set from the value of the second parameter set calculated for each of the required conditions, the weighting factors, and the model information of the probability distribution; and

by the risk profile sampling means, generating a value of the first parameter set in accordance with the generated probability distribution of the first parameter set.

(Supplementary Note 7)

The risk profile generation method according to Supplementary Note 6, including, by the generator distribution regulating means, solving an optimization problem of finding a value of the second parameter set such that the risk profile specified by applying the value of the first parameter set generated in accordance with the probability distribution to the model information of the risk profile satisfies the required conditions to a maximum degree, thereby calculating the value of the second parameter set satisfying the required conditions with a higher probability.

(Supplementary Note 8)

The risk profile generation method according to Supplementary Note 6 or 7, wherein the model information of the risk profile has model information of a frequency distribution and a scale distribution of each event content defined by the first parameter set.

(Supplementary Note 9)

The risk profile generation method according to any of Supplementary Notes 6 to 8, wherein the risk profile generation device further includes a test data generating means and a comparing means, the risk profile generation method including:

by the test data generating means, calculating inputting test data to be used as an input into a risk weighing device to be tested, and a risk amount correct value, from the risk profile specified by applying the generated value of the first parameter set to the model information of the risk profile; and

by the comparing means, transmitting the calculated inputting test data d to the risk weighing device, receiving a weighed risk amount from the risk weighing device, and comparing the received risk amount with the risk amount correct value.

(Supplementary Note 10)

A computer program comprising instructions for causing a computer having a storing unit for storing model information of a risk profile defined by a first parameter set including one or more parameters, model information of a probability distribution of the first parameter set defined by a second parameter set including one or more parameters, a plurality of required conditions, and weighting factors of the plurality of required conditions, to function as:

a generator distribution regulating means for calculating a value of the second parameter set such that a risk profile to be specified by applying a value of the first parameter set generated in accordance with the probability distribution to the model information of the risk profile satisfies the required conditions with a higher probability, for each of the required conditions;

a generator distribution coupling means for generating a probability distribution of the first parameter set from the value of the second parameter set calculated for each of the required conditions, the weighting factors, and the model information of the probability distribution; and

a risk profile sampling means for generating a value of the first parameter set in accordance with the generated probability distribution of the first parameter set.

DESCRIPTION OF REFERENCE NUMERALS

| 1, 2, 3 | risk profile generation device |
|---|---|
| 11, 21, 31 | communication I/F unit |
| 12, 22, 32 | operation inputting unit |
| 13, 23, 33 | screen displaying unit |
| 14, 24, 34 | storing unit |
| 14A, 24A | input information |
| 14A1, 24A1 | model information of risk profile P(X;θ) |
| 14A2, 24A2 | model information of probability distribution P(θη) of parameter set θ |
| 14A3, 24A31-24A3m | required condition |
| 14B, 24B | interim information |
| 14B1, 24B11-24B1m | value of parameter set η |
| 24B2 | probability distribution |
| 14C, 24C | output information |
| 14C1-14Cn, 24C1-24Cn | value of parameter set θ |
| 34D | risk profile generation relevant information |
| 34E | test data |
| 34F | test result |
| 14P, 24P, 34P | program |
| 15, 25, 35 | processor |
| 15A, 25A | input storing unit |
| 15B, 25B | generator distribution regulating unit |
| 15C, 25C | risk profile sampling unit |
| 15D, 25D | output formatting unit |
| 25E | generator distribution coupling unit |
| 35F | risk profile generating unit |
| 35G | test data generating unit |
| 35H | comparing unit |

**Claims**

1.  A risk profile generation device comprising:

a memory for storing model information of a risk profile defined by a first parameter set including one or more parameters, model information of a probability distribution of the first parameter set defined by a second parameter set including one or more parameters, a plurality of required conditions, and weighting factors of the plurality of required conditions; and
a processor connected to the memory,
wherein the processor is configured to:

calculate a value of the second parameter set such that a risk profile to be specified by applying a value of the first parameter set generated in accordance with the probability distribution to the model information of the risk profile satisfies the required conditions with a higher probability, for each of the required conditions; generate a probability distribution of the first parameter set from the value of the second parameter set calculated for each of the required conditions, the weighting factors, and the model information of the probability distribution; and
generate a value of the first parameter set in accordance with the generated probability distribution of the first parameter set.

2. The risk profile generation device according to Claim 1, wherein, when the value of the second parameter set is calculated, an optimization problem of finding a value of the second parameter set such that the risk profile specified by applying the value of the first parameter set generated in accordance with the probability distribution to the model information of the risk profile satisfies the required conditions to a maximum degree is solved.

3. The risk profile generation device according to Claim 1 or 2, wherein the model information of the risk profile has model information of a frequency distribution and a scale distribution of a plurality of event contents defined by the first parameter set.

4. The risk profile generation device according to any of Claims 1 to 3, wherein the processor is further configured to:

   calculate inputting test data to be used as an input into a risk weighing device connected to the processor, and a risk amount correct value, from the risk profile specified by applying the generated value of the first parameter set to the model information of the risk profile;
   transmit the calculated inputting test data to the risk weighing device;
   receive a weighed risk amount from the risk weighing device; and
   compare the received risk amount with the risk amount correct value.

5. The risk profile generation device according to Claim 4, wherein the inputting test data includes a sequence of loss events according to the risk profile, a mean of a frequency distribution of each event content, and a mean of a scale distribution of each event content.

6. A risk profile generation method executed by a risk profile generation device including:

   a memory for storing model information of a risk profile defined by a first parameter set including one or more parameters, model information of a probability distribution of the first parameter set defined by a second parameter set including one or more parameters, a plurality of required conditions, and weighting factors of the plurality of required conditions; and a processor connected to the memory,
   the risk profile generation method comprising, by the processor:

   calculating a value of the second parameter set such that a risk profile to be specified by applying a value of the first parameter set generated in accordance with the probability distribution to the model information of the risk profile satisfies the required conditions with a higher probability, for each of the required conditions;
   generating a probability distribution of the first parameter set from the value of the second parameter set calculated for each of the required conditions, the weighting factors, and the model information of the probability distribution; and
   generating a value of the first parameter set in accordance with the generated probability distribution of the first parameter set.

7. The risk profile generation method according to Claim 6, comprising, when calculating the value of the second parameter set, solving an optimization problem of finding a value of the second parameter set such that the risk profile specified by applying the value of the first parameter set generated in accordance with the probability distribution to the model information of the risk profile satisfies the required conditions to a maximum degree.

8. The risk profile generation method according to Claim 6 or 7, wherein the model information of the risk profile has model information of a frequency distribution and a scale distribution of a plurality of event contents defined by the first parameter set.

9. The risk profile generation method according to any of Claims 6 to 8, further comprising, by the processor:

   calculating inputting test data to be used as an input into a risk weighing device connected to the processor, and a risk amount correct value, from the risk profile specified by applying the generated value of the first parameter set to the model information of the risk profile;
   transmitting the calculated inputting test data to the risk weighing device;
   receiving a weighed risk amount from the risk weighing device; and
   comparing the received risk amount with the risk amount correct value.

10. A computer program comprising instructions for causing a processor connected to a memory for storing model information of a risk profile defined by a first parameter set including one or more parameters, model information of a probability distribution of the first parameter set defined by a second parameter set including one or more parameters, a plurality of required conditions, and weighting factors of the plurality of required conditions, to perform operations including:

calculating a value of the second parameter set such that a risk profile to be specified by applying a value of the first parameter set generated in accordance with the probability distribution to the model information of the risk profile satisfies the required conditions with a higher probability, for each of the required conditions; generating a probability distribution of the first parameter set from the value of the second parameter set calculated for each of the required conditions, the weighting factors, and the model information of the probability distribution; and generating a value of the first parameter set in accordance with the generated probability distribution of the first parameter set.

# FIG. 1

1 RISK PROFILE GENERATION DEVICE

**15 PROCESSOR**

- 15A INPUT STORING UNIT
- 15B GENERATOR DISTRIBUTION REGULATING UNIT
- 15C RISK PROFILE SAMPLING UNIT
- 15D OUTPUT FORMATTING UNIT

**14 STORING UNIT**

- 14A INPUT INFORMATION
- 14B INTERIM INFORMATION
- 14C OUTPUT INFORMATION
- 14P PROGRAM

11 COMMUNICATION I/F UNIT

12 OPERATION INPUTTING UNIT

13 SCREEN DISPLAYING UNIT

# FIG. 2

14A

INPUT INFORMATION

14A1

MODEL INFORMATION OF RISK PROFILE $P(X ; \theta)$

14A2

MODEL INFORMATION OF PROBABILITY DISTRIBUTION $P(\theta ; \eta)$ OF PARAMETER SET $\theta$

14A3

REQUIRED CONDITION

# FIG. 3

14B

INTERIM INFORMATION

14B1

VALUE OF PARAMETER SET $\eta$

# FIG. 4

14C

OUTPUT INFORMATION

14C1

VALUE OF PARAMETER SET $\theta$

.
.
.
.

14Cn

VALUE OF PARAMETER SET $\theta$

# FIG. 5

```
                    ┌─────────────┐
                    │    START    │
                    └──────┬──────┘
                           │
        ┌──────────────────────────────────┐  ~S1
        │      STORE INPUT INFORMATION      │
        └──────────────────┬───────────────┘
                           │
        ┌──────────────────────────────────┐  ~S2
        │    CALCULATE PARAMETER SET  η     │
        └──────────────────┬───────────────┘
                           │
        ┌──────────────────────────────────┐  ~S3
        │     SAMPLE PARAMETER SET  θ       │
        └──────────────────┬───────────────┘
                           │
        ┌──────────────────────────────────┐  ~S4
        │       OUTPUT FINAL RESULT         │
        └──────────────────┬───────────────┘
                           │
                    ┌─────────────┐
                    │     END     │
                    └─────────────┘
```

# FIG. 6

START

DETERMINE INITIAL VALUE $\eta\_0$ OF PARAMETER SET $\eta$ RESET VARIABLE t TO 1 — S11

GENERATE PLURAL CANDIDATES $\eta^1, \cdots, \eta^K$ OF PARAMETER SET $\eta$ AFTER UPDATE — S12

CALCULATE OBJECTIVE FUNCTION OF PROBABILITY DISTRIBUTION $P(\theta \; ; \; \eta^k)$ WITH RESPECT TO EACH PARAMETER SET $\eta^k (k=1, \cdots, K)$ — S13

S16

$t=t+1$

SELECT PARAMETER SET $\eta^k$ WHOSE DEGREE OF SATISFACTION WITH REQUIRED CONDITION IS BEST, AND STORE AS PARAMETER SET $\eta\_t$ — S14

DETERMINE CONCLUSION OF UPDATE OF $\eta$ — S15    NO

YES

SET PARAMETER SET $\eta\_t$ AS OPTIMUM $\eta$ — S17

END

START

GENERATE ONE OR MORE RISK PROFILES $P(X \; ; \; \theta^l)$, WHERE $l = 1, \cdots, L$, IN ACCORDANCE WITH PROBABILITY DISTRIBUTION $P(\theta \; ; \; \eta^k)$ — S21

CALCULATE DEGREES OF SATISFACTION WITH REQUIRED CONDITION WITH RESPECT TO RESPECTIVE RISK PROFILES $P(X \; ; \; \theta^l)$, WHERE $l = 1, \cdots, L$ — S22

SET MEAN OF DEGREES OF SATISFACTION WITH REQUIRED CONDITION OF RESPECTIVE RISK PROFILES $P(X \; ; \; \theta^l)$, WHERE $l = 1, \cdots, L$, AS OBJECTIVE FUNCTION — S23

END

# FIG. 7

14A1 MODEL INFORMATION OF RISK
PROFILE P(X ; θ)

(1) RANDOM VARIABLES x_1, x_2, ⋯ REPRESENTING LOSS EVENTS ARE INDEPENDENT OF EACH OTHER

(2) FREQUENCY DISTRIBUTION OF EVENT CONTENT k FOLLOWS POISSON DISTRIBUTION WITH PARAMETER λk AS MEAN

(3) SCALE DISTRIBUTION OF EVENT CONTENT k FOLLOWS LOG NORMAL DISTRIBUTION WITH PARAMETERS μk and σk AS LOG MEAN AND LOG STANDARD DEVIATION

(4) k=1,⋯, 10

14A2 MODEL INFORMATION OF PROBABILITY
DISTRIBUTION P(θ ; η) OF PARAMETER SET θ

(1) PROBABILITY DISTRIBUTION P(θ ; η) IS INDEPENDENT FOR EACH k

(2) DISTRIBUTION OF (λk, μk, σk) IS MULTIDIMENSIONAL NORMAL DISTRIBUTION

(3) MEAN VECTOR OF MULTIDIMENSIONAL NORMAL DISTRIBUTION IS (2,e1,e2)

(4) COVARIANCE MATRIX OF MULTIDIMENSIONAL NORMAL DISTRIBUTION IS
$$\begin{vmatrix} 0 & 0 & 0 \\ 0 & e3 & e4 \\ 0 & e4 & e5 \end{vmatrix}$$

14A3 REQUIRED CONDITION

(1) SCALE DISTRIBUTION IS EXPONENTIAL DISTRIBUTION OF MEAN PARAMETER 10

# FIG. 8

14A1 MODEL INFORMATION OF RISK
PROFILE P (X ; $\theta$ )

(1) RANDOM VARIABLES x_1, x_2, ··· REPRESENTING LOSS
EVENTS ARE INDEPENDENT OF EACH OTHER

(2) FREQUENCY DISTRIBUTION OF EVENT CONTENT k
FOLLOWS POISSON DISTRIBUTION WITH
PARAMETER $\lambda$ k AS MEAN

(3) SCALE DISTRIBUTION OF EVENT CONTENT k FOLLOWS
LOG NORMAL DISTRIBUTION WITH PARAMETERS
$\mu$ k and $\sigma$ k AS LOG MEAN AND LOG STANDARD
DEVIATION

14A2 MODEL INFORMATION OF PROBABILITY
DISTRIBUTION P( $\theta$ ; $\eta$ ) of PARAMETER SET $\theta$

(1) PROBABILITY DISTRIBUTION P( $\theta$ ; $\eta$ )IS INDEPENDENT
FOR EACH k

(2) DISTRIBUTION OF ( $\lambda$ k, $\mu$ k, $\sigma$ k) IS MULTIDIMENSIONAL
NORMAL DISTRIBUTION

(3) MEAN VECTOR OF MULTIDIMENSIONAL NORMAL
DISTRIBUTION IS (e6,e1,e2)

(4) COVARIANCE MATRIX OF MULTIDIMENSIONAL NORMAL
DISTRIBUTION IS
$$\begin{vmatrix} e7 & e8 & e9 \\ e8 & e3 & e4 \\ e9 & e4 & e5 \end{vmatrix}$$

14A3 REQUIRED CONDITION

(1) SCALE DISTRIBUTION IS EXPONENTIAL DISTRIBUTION OF
MEAN PARAMETER 10

14A4 INDISPENSABLE CONDITION

(1) RANGE OF EVENT CONTENT IS
{EVENT CONTENT 1, ···, EVENT CONTENT 10}

(2) MEAN OF NUMBERS OF EVENTS HAVING EVENT
CONTENT k IS 2

# FIG. 9

$\theta$ = (1, 3, 200 MILLION, 30 MILLION, 1 MILLION, 0.5 MILLION)

VaR=300 MILLION

| EVENT CONTENT | MEAN OF FREQUENCY DISTRIBUTION | MEAN + STANDARD DEVIATION × 2 OF FREQUENCY DISTRIBUTION |
|---|---|---|
| TOKAI EARTHQUAKE | 1 | 260 MILLION |
| BANK TRANSFER SCAM | 3 | 2 MILLION |

RESULT OF SAMPLING OF P(X ; $\theta$)

| |
|---|
| X = (TOKAI EARTHQUAKE, 215 MILLION),<br>(BANK TRANSFER SCAM, 1.25 MILLION)<br>(BANK TRANSFER SCAM, 0.98 MILLION) |
| X = (BANK TRANSFER SCAM, 1.15 MILLION),<br>(BANK TRANSFER SCAM, 0.88 MILLION)<br>(BANK TRANSFER SCAM, 2.25 MILLION),<br>(BANK TRANSFER SCAM, 0.93 MILLION) |
| X = (BANK TRANSFER SCAM, 0.88 MILLION),<br>(BANK TRANSFER SCAM, 2.25 MILLION)<br>(BANK TRANSFER SCAM, 0.93 MILLION),<br>(TOKAI EARTHQUAKE, 190 MILLION) |
| X = (BANK TRANSFER SCAM, 0.88 MILLION),<br>(BANK TRANSFER SCAM, 0.98 MILLION) |
| X = (TOKAI EARTHQUAKE, 190 MILLION),<br>(TOKAI EARTHQUAKE, 215 MILLION)<br>(BANK TRANSFER SCAM, 1.25 MILLION) |

# FIG. 10

2 RISK PROFILE GENERATION DEVICE

25

24

PROCESSOR 25A

STORING UNIT

INPUT STORING UNIT

24A

21

INPUT INFORMATION

COMMUNICATION I/F UNIT

25B

24B

GENERATOR DISTRIBUTION REGULATING UNIT

INTERIM INFORMATION

25E

24C

22

GENERATOR DISTRIBUTION COUPLING UNIT

OUTPUT INFORMATION

OPERATION INPUTTING UNIT

25C

RISK PROFILE SAMPLING UNIT

23

24P

25D

SCREEN DISPLAYING UNIT

PROGRAM

OUTPUT FORMATTING UNIT

# FIG. 11

24A

INPUT INFORMATION      24A1

MODEL INFORMATION OF RISK PROFILE $P(X ; \theta)$

24A2

MODEL INFORMATION OF PROBABILITY
DISTRIBUTION $P(\theta ; \eta)$ OF PARAMETER SET $\theta$

24A31

REQUIRED CONDITION

⋮

24A3m

REQUIRED CONDITION

24A4

WEIGHT INFORMATION

# FIG. 12

24B

INTERIM INFORMATION

24B11

VALUE OF PARAMETER SET $\eta$

⋮

24B1m

VALUE OF PARAMETER SET $\eta$

24B2

PROBABILITY DISTRIBUTION $P(\theta ; \eta\_N)$

# FIG. 13

24C

OUTPUT INFORMATION

24C1

VALUE OF PARAMETER SET $\theta$

.
.
.
.

24Cn

VALUE OF PARAMETER SET $\theta$

# FIG. 14

```
        ( START )
            │
┌───────────────────────────────┐
│  STORE INPUT INFORMATION       │──S31
└───────────────────────────────┘
            │
┌───────────────────────────────┐
│  CALCULATE PARAMETER SET η     │──S32
└───────────────────────────────┘
            │
┌───────────────────────────────┐
│  GENERATE PROBABILITY          │──S33
│  DISTRIBUTION P( θ ; η _N)      │
└───────────────────────────────┘
            │
┌───────────────────────────────┐
│  SAMPLE PARAMETER SET θ        │──S34
└───────────────────────────────┘
            │
┌───────────────────────────────┐
│  OUTPUT FINAL RESULT           │──S35
└───────────────────────────────┘
            │
        ( END )
```

# FIG. 15

24A1 MODEL INFORMATION OF RISK PROFILE P(X ; $\theta$)

(1) RANDOM VARIABLES x_1, x_2, ⋯ REPRESENTING LOSS EVENTS ARE INDEPENDENT OF EACH OTHER

(2) FREQUENCY DISTRIBUTION OF EVENT CONTENT k FOLLOWS POISSON DISTRIBUTION WITH PARAMETER $\lambda$ k AS MEAN

(3) SCALE DISTRIBUTION OF EVENT CONTENT k FOLLOWS LOG NORMAL DISTRIBUTION WITH PARAMETERS $\mu$ k AND $\sigma$ k AS LOG MEAN AND LOG STANDARD DEVIATION

(4) k=1,⋯, 10

24A2 MODEL INFORMATION OF PROBABILITY DISTRIBUTION P($\theta$ ; $\eta$) OF PARAMETER SET $\theta$

(1) PROBABILITY DISTRIBUTION P($\theta$ ; $\eta$) IS INDEPENDENT FOR EACH k

(2) DISTRIBUTION OF ($\lambda$ k, $\mu$ k, $\sigma$ k) IS MULTIDIMENSIONAL NORMAL DISTRIBUTION

(3) MEAN VECTOR OF MULTIDIMENSIONAL NORMAL DISTRIBUTION IS (2,e1,e2)

(4) COVARIANCE MATRIX OF MULTIDIMENSIONAL NORMAL DISTRIBUTION IS $\begin{vmatrix} 0 & 0 & 0 \\ 0 & e3 & e4 \\ 0 & e4 & e5 \end{vmatrix}$

24A31 REQUIRED CONDITION

(1) SCALE DISTRIBUTION IS EXPONENTIAL DISTRIBUTION OF MEAN PARAMETER 2

24A32 REQUIRED CONDITION

(1) SCALE DISTRIBUTION IS EXPONENTIAL DISTRIBUTION OF MEAN PARAMETER 10

24A4 WEIGHT INFORMATION

(1) (w_1,w_2)=(0.0, 1.0), (0.2, 0.8), (0.4, 0.6), (0.6, 0.4), (0.8, 0.2), (1.0, 0.0)

# FIG. 16

RISK PROFILE GENERATION DEVICE 3 — 4 COMMUNICATION LINE — RISK WEIGHING DEVICE 5

# FIG. 17

3 RISK PROFILE GENERATION DEVICE

35 PROCESSOR

34 STORING UNIT

31 COMMUNICATION I/F UNIT

32 OPERATION INPUTTING UNIT

33 SCREEN DISPLAYING UNIT

35F RISK PROFILE GENERATING UNIT

35G TEST DATA GENERATING UNIT

35H COMPARING UNIT

34D RISK PROFILE GENERATION RELEVANT INFORMATION

34E TEST DATA

34F TEST RESULT

34P PROGRAM

# FIG. 18

34E

TEST DATA                                    34E1

INPUTTING TEST DATA                    34E11

SEQUENCE X OF LOSS EVENTS OF RISK
PROFILE $P(X ; \theta)$

34E12

MEAN OF FREQUENCY DISTRIBUTION FOR
EACH EVENT CONTENT OF RISK PROFILE
$P(X ; \theta)$

34E13

MEAN OF SCALE DISTRIBUTION FOR EACH
EVENT CONTENT OF RISK PROFILE $P(X ; \theta)$

34E2

RISK AMOUNT CORRECT VALUE

# FIG. 19

START

GENERATE RISK PROFILE P (X ; θ ) — S41

GENERATE TEST DATA — S42

TRANSMIT INPUTTING TEST DATA TO RISK ESTIMATION DEVICE — S43

RECEIVE RISK AMOUNT FROM RISK ESTIMATION DEVICE — S44

COMPARE ESTIMATED RISK AMOUNT WITH CORRECT VALUE — S45

OUTPUT TEST RESULT — S46

END

# FIG. 20

```
        ( START )
            |
+---------------------------+  ~S51
|   READ GENERATED θ        |
+---------------------------+
            |
+---------------------------+  ~S52
| CALCULATE MEAN OF FREQUENCY|
| DISTRIBUTION AND MEAN OF   |
| SCALE DISTRIBUTION FOR EACH|
| EVENT CONTENT              |
+---------------------------+
            |
+---------------------------+  ~S53
| GENERATE ONE OR MORE      |
| SEQUENCES OF LOSS EVENTS  |
+---------------------------+
            |
+---------------------------+  ~S54
| GENERATE RISK AMOUNT      |
| CORRECT VALUE             |
+---------------------------+
            |
        ( END )
```

## INTERNATIONAL SEARCH REPORT

| | International application No. |
|---|---|
| | PCT/JP2012/002002 |

**A. CLASSIFICATION OF SUBJECT MATTER**
*G06Q40/06*(2012.01)i

According to International Patent Classification (IPC) or to both national classification and IPC

**B. FIELDS SEARCHED**

Minimum documentation searched (classification system followed by classification symbols)
G06Q40/06

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2011/037169 A1 (NEC Corp.), 31 March 2011 (31.03.2011), entire text; all drawings (Family: none) | 1-10 |
| A | JP 10-222488 A (Hitachi, Ltd.), 21 August 1998 (21.08.1998), entire text; all drawings (Family: none) | 1-10 |
| A | JP 2004-252893 A (Fujitsu Ltd.), 09 September 2004 (09.09.2004), entire text; all drawings (Family: none) | 1-10 |

☒ Further documents are listed in the continuation of Box C.　　☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 08 May, 2012 (08.05.12) | 22 May, 2012 (22.05.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

| | INTERNATIONAL SEARCH REPORT | International application No. |
|---|---|---|
| | | PCT/JP2012/002002 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-36346 A  (The Mitsubishi Trust and Banking Corp.), 07 February 2003 (07.02.2003), entire text; all drawings (Family: none) | 1-10 |
| A | Takaaki KOBAYASHI, "Operational Risk Kanri Kodoka eno Chosen", 1st edition, Kinzai Institute for Financial Affairs, Inc., Isao KURATA, 24 April 2009 (24.04.2009), pages 127 to 134 | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10222488 A
- JP 4241083 B

- JP 2011072742 A

**Non-patent literature cited in the description**

- **KOBAYASHI ; SHIMIZU ; NISHIGUCHI ; MORINA-GA.** Operational Risk Management. Kinzai Institute for Financial Affairs, Inc, 24 April 2009, 127-134